# EUROPEAN PATENT APPLICATION

(11) **EP 4 629 097 A1**
(43) Date of publication of application: **08.10.2025**
(21) Application number: 25166482.7
(22) Date of filing: 26.03.2025
(51) Int. Cl.: G06F 16/332, G06F 16/9535, G06Q 30/02

(54) **COMPUTER-IMPLEMENTED SYSTEM AND ASSOCIATED METHODS FOR INTERACTIVE QUERIES AND SEARCHES**

(30) Priority: 03.04.2024 US 202418626049
(71) Applicant: adMarketplace, Inc., New York, NY 10018 (US)
(72) Inventor: Hill, James W., New York, 10016 (US); Epstein, Adam J., New York, 10016 (US); Rajagopal, Arun, New York, 10016 (US); Read, Steven, New York, 10016 (US)
(74) Representative: Praxi Intellectual Property Milano

(57) **Abstract**

A computer-implemented system for interactive queries and searches is provided. The system may include a reference data database including reference data, a search term database including search terms, and a collaborator unit. The collaborator unit may receive a user input inputted into an interaction space of a user device and may compare and match the user input to the search terms to define a first query input. The collaborator unit may associate the first query input with portion(s) of the reference data to generate an output response. The collaborator unit may receive an additional user input and may compare and match the additional user input to the search terms to define a refined query input. The collaborator unit may associate the refined query input with portion(s) of the reference data and with the first output response to generate another output response.

## Description

### Field of the Invention

The present invention relates to systems and methods for computer-implemented systems for interactive internet searches.

### Background of the Invention

Conducting internet searches for online shopping is something that consumers have engaged in for a long period of time. The typical search includes a consumer inputting information into a search bar and receiving output information facilitate sifting through the vast amount of information on the Internet. More specifically, the prior art disclose a user entering a search query into the search bar of a search engine and based on the entered search query, the search engine will output a results that include webpages that are deemed related to the entered search query, based on certain algorithms of the search engine. If the user is interested in one of the results on the results page, the user may activate a hyperlink to be brought to a webpage. However, if a user is not satisfied with the results shown by the search engine, the user will return to the search bar and enter another search query. This cycle repeats until the user is satisfied or stops using the search engine. However, this cycle can be time consuming and frustrating as a consumer will rarely be directed to the exact product they are looking for. Further, despite a consumer entering information into the search bar that may be relevant to the product they are looking for, they may be redirected to an alternative product based on certain advertising and/or manipulation of algorithms.

The prior art fail to provide a tool that allows consumers to view precise and accurate results for the searches entered for a number of reasons. The main failure of the prior art is to accurately determine the intent of the user based on a relatively short search query entry, as the vast majority of search query entries by users rarely include information that is complete. Therefore, there exists a problem unsolved by the prior art to accurate and meaningful results based on short search query entries by determining the full intent of the user. Another problem presented and unsolved by the prior art providing accurate internet searches in a way that is minimally invasive to a user's data and that minimizes dissemination of the user's data to other parties without the user's knowledge.

This background information is provided to reveal information believed by the applicant to be of possible relevance to the present invention. No admission is necessarily intended, nor should be construed, that any of the preceding information constitutes prior art against the present invention.

### Summary of the Invention

With the above in mind, embodiments of the present invention are related to a computer-implemented system for queries and searches to provide targeted search and query results. The system may include a reference data database, a search term database, and a collaborator unit. The reference data database may include reference data, and the search term database may include a plurality of search terms. The collaborator unit may be communicatively coupled to a network and may be configured to access the reference data database and the search term database. The collaborator unit may receive one or more of a user input inputted into an interaction space of a user device, which may define a first user input. The collaborator unit may compare and match the first user input to the plurality of search terms to define a first query input. The collaborator unit may associate the first query input with at least a portion of the reference data to generate a first output response to be displayed at the user device. The collaborator unit may be operable to receive an additional user input to define a refined user input. The collaborator unit may compare and match the refined user input to the plurality of search terms to define a refined query input. The collaborator unit may associate the refined query input with at least a portion of the reference data and with the first output response to generate a refined output response to be displayed at the user device.

The reference data may include one or more of user profile data, non-user profile data, publisher data, and product data. The user profile data may be associated with a current user of the user device. The user profile data may include one or more of input history inputted by the current user, internet search history of the current user, geographic location of the current user, present time of day, present date, current season at the geographic location of the user device, online purchase history by the current user, website browsing history of the current user, type of user device being used, and/or length of present internet session of the current user.

The collaborator unit may be operable to update the user profile data with one or more of the first user input, the first query input, the first output response, the refined user input, the refined query input, and/or the refined output response. The collaborator unit may be operable to identify a user history request based on one or more of the first user input and the refined user input. The collaborator unit may display at least a portion of the user profile data at the user device based on the user history request. The non-user profile data may include one or more of input history inputted by other users, internet search history of the other users, geographic location of the other users, time-stamps of the other users, time-stamps of the seasons of the other users, online purchase history by the other users, and/or website browsing history of the other users.

The publisher data may be associated with one or more of an online product publisher and an online retailer. The publisher data may also include one or more of publisher review ratings, publisher engagement count, publisher placement bids, publisher sales history, publisher product offerings, publisher geographic location, publisher trust rating, and/or publisher success history. The product data may be associated with one or more of a good offered online and a service offered online. The product data may include one or more of product price, product price history, relative product price to comparable products, product quantity in stock, estimated shipping cost, estimated product shipping speed, product geographic location, product source location, product review rating, product purchase history, product engagement history, product return history, product satisfaction rating, associated supplier, publisher data of the product, and/or at least one product characteristic. The at least one product characteristic may include one or more of product type, product quality, product associated occasion, product dimensions, product associated use, product brand, product material, product style, product color, and/or product use compatibility.

The first user input and the refined user input may comprise one or more of a character, a word, a phrase, a sentence, a spoken language, a speech-to-text input, an image, a webpage, a document, a statement, a request, a point of information, and/or a question. Each of the first user input and the refined user input may be associated with a description. The description may include one or more of an occasion, a use, problem, want, need, a date, date of use, date of receival, date range, a price, price range, geographic location, a good, a good type, a service, a service type, and/or product traits. The product traits may include one or more of quality, reliability, color, style, dimensions, compatibility, popularity, source, provider, and/or product composition. The first query input may be provided as a list of matched search terms. The refined query input may be provided as a list of refined matched search terms.

Each of the plurality of search terms may be associated with one or more of a search parameter. The search parameter may comprise one or more of a good constraint, a good type constraint, a service constraint, a service type constraint, a geographic location constraint, a weather constraint, a season constraint, a use indication constraint, a problem indication constraint, a cost constraint, a time constraint, a good characteristics constraint, a service characteristics constraint, and/or a source constraint. The collaborator unit may perform an interpretation process to determine one or more of a correlation between the first user input, the plurality of search terms, and/or at least a portion of the reference data. The first query input may be defined by comparing and matching the first user input to the plurality of search terms based on the correlation.

The collaborator unit may perform a refined interpretation process to determine one or more of a refined correlation between the first user input, the refined user input, the plurality of search terms, and at least a portion of the reference data. The refined query input may be defined by comparing and matching the refined user input to the plurality of search terms based on the at least one refined correlation. The first output response and the refined output response may each comprise one or more of a prompt and/or a landing page. The prompt may be displayed at the interaction space and/or adjacent to the interaction space. The prompt may comprise one or more of a conversation indicator and a product listing. The conversation indicator may comprise one or more of a statement, a question, an assertion, a declaration, an explanation, an exclamation, an answer, and a command; and wherein the product listing includes at least one of a hyperlink, a product advertisement, and/or a product description.

The conversation indicator may include a cue. The cue may include a request for one or more of, user input to be inputted into the interaction space to refine at least one of the first output response and the refined output response, and/or an inquiry to accept at least one of the first output response and the refined output response with the user input inputted responsive to the cue. The landing page may include one or more of a product offering webpage, a goods offering webpage, a service offering webpage, a publisher website, a retailer website, a merchant webpage, a product review webpage, a product discussion webpage and/or a formulated webpage. The formulated webpage may comprise one or more of a formulated offering webpage and/or a formulated directory webpage.

The first output response may be based on the portion of the reference data associated with the first query input. The refined output response may be based on the portion of the reference data associated with the refined query input. The reference data database and the search term database may be communicatively coupled to the network. The collaborator unit may access the reference data database and the search term database via the network. Some embodiments of the present invention may include one or more of a server that may be communicatively coupled to the network. The reference data database and the search term database may be downloadable and updatable to be stored on the user device. The at least one server may store one or more of updated reference data and/or updated search terms. The collaborator unit may access the one or more servers via the network and may update at least a portion of the reference data with the updated reference data and update the plurality of search terms with the updated search terms.

Some embodiments of the present invention may be directed to a computer-implemented system for queries and searches to provide targeted search and query results. The system may comprise a reference data database, a search term database, and a collaborator unit. The reference data database may include reference data, and the search term database may include a plurality of search terms. The collaborator unit may be communicatively coupled to a network and may be configured to access the reference data database and the search term database. The collaborator unit may receive one or more of a user input inputted into an interaction space of a user device, to define a first user input. The collaborator unit may compare and match the first user input to the plurality of search terms to define a first query input. The collaborator unit may associate the first query input with at least a portion of the reference data to generate a first output response to be displayed at the user device. The collaborator unit may be operable to prompt the user for a determination of sufficiency of the first output response. Upon a determination of insufficiency of the first output response, the collaborator unit may be operable to receive an additional user input to define a refined user input. The collaborator unit may compare and match the refined user input to the plurality of search terms to define a refined query input. The collaborator unit may associate the refined query input with at least a portion of the reference data and with the first output response to generate a refined output response to be displayed at the user device. The collaborator unit may continue to receive the refined user input until the collaborator unit determines that the refined output response is sufficient based on input from the user.

A method aspect of the present invention may be directed to a computer-implemented method for providing targeted search and query result. The method may include receiving at least one user input to define a first user input, accessing reference data stored in a reference data database, and accessing a plurality of search terms stored in a search term database. The method may further include comparing and matching the first user input to the plurality of search terms to define a first query input, and generating a first output response to be displayed by associating the first query input with at least a portion of the reference data. The method may yet further include generating a refined output response upon receiving an additional input defined as a refined user input. Generating the refined output response may include comparing and matching the refined user input to the plurality of search terms to define a refined query input, associating the refined query input with at least a portion of the reference data and with the first output response to generate the refined output response, and displaying the refined output response.

The method may further include updating the user profile data with one or more of the first user input, the first query input, the first output response, the refined user input, the refined query input, and/or the refined output response. The method may yet further include identifying a user history request based on one or more of the first user input and/or the refined user input. The method may also include associating at least a portion of the user profile data with the user history request. The method may further include displaying the portion of the user profile data associated with the user history. The non-user profile data may include one or more of input history inputted by other users, internet search history of the other users, geographic location of the other users, time-stamps of the other users, time-stamps of the seasons of the other users, online purchase history by the other users, and/or website browsing history of the other users.

The method may yet further include associating the publisher data with one or more of an online product publisher and/or an online retailer. The publisher data may also include one or more of publisher review ratings, publisher engagement count, publisher placement bids, publisher sales history, publisher product offerings, publisher geographic location, publisher trust rating, and/or publisher success history. The product data may be associated with one or more of a good offered online and a service offered online. The product data may include one or more of product price, product price history, relative product price to comparable products, product quantity in stock, estimated shipping cost, estimated product shipping speed, product geographic location, product source location, product review rating, product purchase history, product engagement history, product return history, product satisfaction rating, associated supplier, publisher data of the product, and/or at least one product characteristic. The at least one product characteristic may include one or more of product type, product quality, product associated occasion, product dimensions, product associated use, product brand, product material, product style, product color, and/or product use compatibility.

The first user input and the refined user input may comprise one or more of a character, a word, a phrase, a sentence, a spoken language, a speech-to-text input, an image, a webpage, a document, a statement, a request, a point of information, and/or a question. Each of the first user input and the refined user input may be associated with a description. The description may include one or more of an occasion, a use, problem, want, need, a date, date of use, date of receival, date range, a price, price range, geographic location, a good, a good type, a service, a service type, and/or product traits. The product traits may include one or more of quality, reliability, color, style, dimensions, compatibility, popularity, source, provider, and/or product composition. The first query input may be provided as a list of matched search terms. The refined query input may be provided as a list of refined matched search terms.

The method may also include associating the product data with one or more of a good offered online and/or a service offered online. The method may further include associating each one of the plurality of search terms with at least one search parameter. The search parameter may comprise one or more of a good constraint, a good type constraint, a service constraint, a service type constraint, a geographic location constraint, a weather constraint, a season constraint, a use indication constraint, a problem indication constraint, a cost constraint, a time constraint, a good characteristics constraint, a service characteristics constraint, and/or a source constraint. The method may yet further include performing an interpretation process to determine at least one correlation between the first user input, the plurality of search terms, and at least a portion of the reference data. Comparing and matching the first user input to the plurality of search terms to define the first query input may be based on the at least one correlation.

The method may also include performing a refined interpretation process to determine at least one refined correlation between the first user input, the refined user input, the plurality of search terms, and/or at least a portion of the reference data. Comparing and matching the refined user input to the plurality of search terms to defined the refined query input may be based on the at least one refined correlation. The first output response and the refined output response may each comprise one or more of a prompt and/or a landing page. The prompt may be displayed at the interaction space and/or adjacent to the interaction space. The prompt may comprise one or more of a conversation indicator and a product listing. The conversation indicator may comprise one or more of a statement, a question, an assertion, a declaration, an explanation, an exclamation, an answer, and a command; and wherein the product listing includes at least one of a hyperlink, a product advertisement, and/or a product description.

The conversation indicator may include a cue. The cue may include a request for one or more of, user input to be inputted into the interaction space to refine at least one of the first output response and the refined output response, and/or an inquiry to accept at least one of the first output response and the refined output response with the user input inputted responsive to the cue. The landing page may include one or more of a product offering webpage, a goods offering webpage, a service offering webpage, a publisher website, a retailer website, a merchant webpage, a product review webpage, a product discussion webpage and/or a formulated webpage. The formulated webpage may comprise one or more of a formulated offering webpage and/or a formulated directory webpage.

The first output response may be based on the portion of the reference data associated with the first query input.. The method may further include accessing the reference data database and the search term database via a network. The method may yet further include downloading and storing the reference data database and the search term database on a user device, and the method may also include updating at least a portion of the reference data database and at least a portion of the search terms database. The reference data database and the search term database may be updated upon an update input received from the user device.

### Brief Description of the Drawings

Some embodiments of the present invention are illustrated as an example and are not limited by the figures of the accompanying drawings, in which like references may indicate similar elements.
FIG. 1 is a schematic illustration of a computer-implemented system for interactive internet searches according to an embodiment of the present invention that includes a user device, according to an embodiment of the present invention.
FIG. 2 is a schematic illustration of the computer-implemented system of FIG. 1, shown with a web browser extension utilized to conduct interactive internet searches.
FIG. 3 is a schematic illustration of the computer-implemented system of FIG. 1, shown with an interaction space webpage utilized to conduct interactive internet searches.
FIG. 4 is a schematic illustration of the computer-implemented system of FIG. 2, with the web browser extension being utilized to determine a refined output response based on multiple user inputs.
FIG. 5 is a schematic illustration of the computer implemented system of FIG. 1, displaying a formulated offering webpage generated as an output response.
FIG. 6 is a schematic illustration of the computer implemented system of FIG. 1, displaying a landing page comprising a merchant website as the output response.
FIG. 7 is a schematic illustration of the computer implemented system of FIG. 1, displaying a formulated directory webpage generated as an output response.
FIG. 8 is a flowchart of a method aspect according to an embodiment of the present invention.
FIG. 9 is a continuation of the flowchart of FIG. 8.
FIG. 10 is a flowchart of another method aspect according to an embodiment of the present invention.
FIG. 11 is a schematic illustration of the computer implemented system of FIG. 1, shown with an interaction space webpage utilized to conduct interactive internet searches.

### Detailed Description of the Invention

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Those of ordinary skill in the art realize that the following descriptions of the embodiments of the present invention are illustrative and are not intended to be limiting in any way. Other embodiments of the present invention will readily suggest themselves to such skilled persons having the benefit of this disclosure. Like numbers refer to like elements throughout.

Although the following detailed description contains many specifics for the purposes of illustration, anyone of ordinary skill in the art will appreciate that many variations and alterations to the following details are within the scope of the invention. Accordingly, the following embodiments of the invention are set forth without any loss of generality to, and without imposing limitations upon, the claimed invention.

In this detailed description of the present invention, a person skilled in the art should note that directional terms, such as "above," "below," "upper," "lower," and other like terms are used for the convenience of the reader in reference to the drawings. Also, a person skilled in the art should notice this description may contain other terminology to convey position, orientation, and direction without departing from the principles of the present invention.

Furthermore, in this detailed description, a person skilled in the art should note that quantitative qualifying terms such as "generally," "substantially," "mostly," and other terms are used, in general, to mean that the referred to object, characteristic, or quality constitutes a majority of the subject of the reference. The meaning of any of these terms is dependent upon the context within which it is used, and the meaning may be expressly modified.

An embodiment of the invention, as shown and described by the various figures and accompanying text, provides a computer-implemented system 100 for interactive searches and queries. Throughout herein, although embodiments of the present invention may be described as being utilized for performing internet searches and queries directed to online shopping for goods and/or services, it is contemplated that embodiments of the present invention may be utilized to conduct internet searches and queries directed to any subject or object. For example, but without limitation, internet searches conducted to find relevant stores, restaurants, cafes, jobs offers, medical providers, insurance agencies, schools, school programs, job applicants, product and/or service reviews, blogs, and/or online forums, and any other subject or object that can be searched for via the internet.

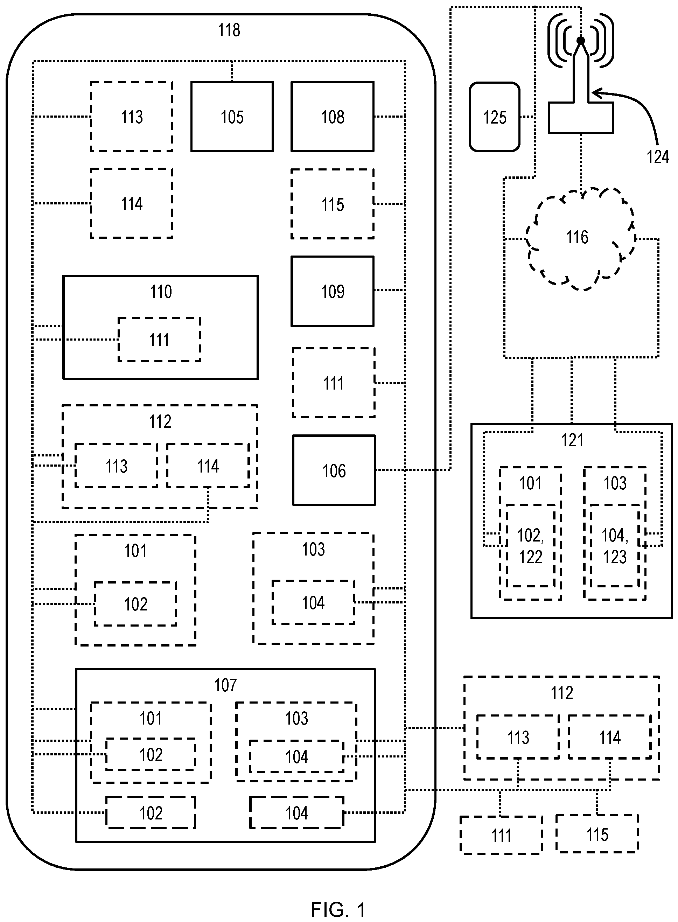

The features, advantages, and goals accomplished by the various embodiments of the present invention may now be described in greater detail. Initially referring to FIG. 1, the computer-implemented system 100 may include a user device 118 and/or the system 100 may be configured to be utilized by a user device 118. The system 100 may be operable to facilitate and/or conduct internet searches of users of the user device 118 to identify, generate, and display results that may be more relevant to the user's search by using and referencing reference data 102, and in a manner that may be more akin to a typical conversation between people in contrast to the typical broken language and keyword entries presently used by users to conduct internet searches. Throughout this disclosure, a user may also be referred to as a consumer. Those skilled in the art will appreciate that this is mean to refer to anyone that may be conducting an internet search, or that may be looking for a good and/or service online by conducting an internet search.

The user device 118 may be utilized to compute and/or execute computer-readable language and instructions. The user device 118 may be operable to communicate computer-readable language and instructions to, from, and with other devices, and the communication between the user device 118 and other devices may be via a network 116. The user device 118 may also be operable to display information and depictions thereon, and the user device 118 may be operable to read, translate, register, and/or interpret inputs made by a user with the user device 118. The user device 118 may be configured to read, write, delete, send, receive, and/or store computer-readable code, information, commands, data, and/or executables. The user device 118 may also be operable to record, display, sense, generate, and/or emit pictures, video, audio sound, and/or images. Examples of the user device 118 include, but are not limited to, a cellular phone, a smart phone, a computer tablet, a personal computer, a laptop, a smart-watch, a desktop computer, a computer terminal, and/or any computation machine and/or any combination or combinations thereof as may be understood by those who may have skill in the art. Those skilled in the art will appreciate that the user device 118 may be any device that is capable of accessing the internet and conducting an internet search thereon.

The user device 118 may have a user device body and may include a collaborator unit 105, a network unit 106, a power unit 108, a display unit 110, and/or an input unit 111. The collaborator unit 105 may be carried by the user device 118. The collaborator unit 105 may be in communication with the network unit 106, the power unit 108, the display unit 110, and the input unit 111. The collaborator unit 105 may be utilized to read, write, store, compute, interpret, translate, execute, run, and/or manage computer-readable data, information, code, executables, and/or any other machine-readable information as may be understood by those who may have skill in the art. The collaborator unit 105 may be operable to send, receive, transmit, and/or transceive computer-readable data, information, code, executables, and/or any other machine-readable information. The collaborator unit 105 may be utilized to selectively control, monitor, and/or manage other electronic components and/or computer components. Examples of the collaborator unit 105 include, but without limitation, a central processing unit, a graphics processing unit, a co-processor, a microcontroller, a microprocessor, and/or any other processor component as may be understood by those who may have skill in the art.

The network unit 106 may be carried by the user device 118, and the network unit 106 may be couplable in communication with the collaborator unit 105, the power unit 108, and/or the network 116. The network unit 106 may also be couplable in communication with at least one server 121, an input unit 111, other user devices 125, and/or with a network transceiver 124. The network unit 106 may be utilized to allow, facilitate, manage, and/or monitor communications of computer-readable data, instructions, code, information, and/or executables to, with, and/or via the network unit 106. The network unit 106 may be utilized to allow, facilitate, manage, and/or monitor the transmission of communications of computer-readable data, instructions, code, information, and/or executables between components that are in communication via the network unit 106. Components that are in communication with the network unit 106 may thus be in communication with a network 116, other devices/components, and/or other devices/components through a network 116 via the network unit 106. Examples of the network unit 106 include, but without limitation, a network card, a router, a wireless computer-readable communication component, a wired computer-readable communication component, a hub, a switch, and/or any other component for facilitation of communication of computer-readable data as may be understood by those who may have skill in the art.

The power unit 108 may be carried by the user device 118. In some embodiments the power unit 108 may be partially carried by the user device 118, and in yet other embodiments the power unit 108 may be separate and apart from the user device 118. The power unit 108 may be utilized to provide, manage, regulate, and/or otherwise control electrical power to and/or at electronic components that the power unit 108 may be in communication with. Examples of the power unit 108 include, but without limitation, a power charger, a battery, a power supply, a power brick, a voltage regulator, an amperage regulator, an inductor, a rectifier, a fuse, a power relay, an outlet plug, a power generator, a photovoltaic unit, a supercapacitor, and/or any combination or combinations thereof as may be understood by those who may have skill in the art.

The display unit 110 may be carried by the user device 118, and in some embodiments, the display unit 110 may be separate and apart from the user device 110. The display unit 110 may be in communication with the collaborator unit 105 and/or with the power unit 108. The display unit 110 may be utilized to display, show, generate, and/or emit images, information, depictions, and/or video. In some embodiments, the display unit 110 may be operable to read, receive, sense, detect and/or otherwise interpret inputs made by a user with the display unit 110, defining a user input 204, and the display unit 110 may send and/or emit the user input 204 to the collaborator unit 105. More details on the user input 204 follow further below. Examples of the display unit 110 include, but without limitation, a monitor, a touch-screen display, a television, a projector, and/or any other display screen as may be understood by those who may have skill in the art and any combination or combinations thereof.

The input unit 111 may be carried by the user device 118, and/or the input unit 111 may be separate and apart from the user device 118. Some embodiments of the present invention may include more than one input unit 111, and each input unit 111 may be carried by the user device 118, and/or separate and apart from the user device 118, and/or less than all the input units 111 may be carried by the user device 118. The input unit 111 may be in communication with the collaborator unit 105, the network unit 106, the power unit 108, and/or with the display 110. The input unit 111 may be operable by the user to read, receive, sense, detect and/or otherwise interpret inputs made by a user with the input unit 111, defining a user input 204, and the input unit 111 may send and/or emit the user input 204 to the collaborator unit 105. Examples of the input unit 111 include, but without limitation, a touch screen display, a button, a switch, a keyboard, a mouse, a microphone, a track-ball, an optical eye-tracking camera, a joystick, a remote, a motion sensor/motion tracker, and/or any other input device that may be utilized as the input unit 111 as may be understood by those who may have skill in the art.

In some embodiments of the present invention that do not include a display unit 110 that is operable to read and generate user inputs 204, one or more input units 111 may be utilized to read and generate user inputs 204 to be sent to the collaborator unit 105. In other embodiments of the present invention that do include a display unit 110 that is operable to read and generate user inputs 204 to be sent to the collaborator unit 105, these embodiment may not include any input units 111, but optionally may also include one or more input units 111.

In some embodiments of the system 100, the user device 118 may include a reference data database 101, a search term database 102, a data storage unit 107, a data memory unit 109, an audio unit 112, and a camera unit 115. The reference data database 101 may be carried by the user device 118, and in some embodiments, the reference data database 101 may be separate and apart from the user device 118. The reference data database 101 may be in communication with the collaborator unit 105, and power unit 108, and/or the network unit 106. The reference data database 101 may store reference data 102 that may be accessible by the collaborator unit 105. In some embodiments, the reference data database 101 may be carried by one or more servers 121 that may be in communication with the user device 118, the network unit 106, and/or the collaborator unit 105 via a network 116 and/or network transceiver 124. In some embodiments of the system 100, the user device 118 may include a reference data database 101 that stores reference data 102, and the user device 118, network unit 106, and/or collaborator unit 105 may be in communication with one or more servers 121 that also include another reference data database 101 which stores updated reference data 102.

The search term database 103 may be carried by the user device 118, and in some embodiments, the search term database 103 may be separate and apart from the user device 118. The search term database 103 may be in communication with the collaborator unit 105, and power unit 108, and/or the network unit 106. The search term database 103 may store a plurality of search terms 104 that may be accessible by the collaborator unit 105. In some embodiments, the search term database 103 may be carried by one or more servers 121 that may be in communication with the user device 118, the network unit 106, and/or the collaborator unit 105 via a network 116 and/or network transceiver 124. In some embodiments of the system 100, the user device 118 may include a search term database 103 that stores a plurality of search terms 104, and the user device 118, network unit 106, and/or collaborator unit 105 may be in communication with one or more servers 121 that also include another search term database 103 which stores an updated plurality of search terms 104 .

In some embodiments of the system 100, the user device 118 may include a data storage unit 107. The data storage unit 107 may be carried by the user device 118, and may be in communication with the collaborator unit 105, the power unit 108, and/or the network unit 106. The data storage unit 107 may be utilized to receive, send, read, write, delete, and/or store computer-readable data, instructions, code, programs, executables, and/or information. The data storage unit 107 may also allow the collaborator unit 105 to access and receive the data stored in the data storage unit 107. In some embodiments of the present invention, the data storage unit 107 may store the reference data 102 and/or the plurality of search terms 104. In yet other embodiments of the present invention, the data storage unit 107 may store the reference data database 101, the reference data 102, the search term database 103 and the plurality of search terms 104. Examples of the data storage unit 107 may include, but without limitation, a hard drive, disk drive, a compact disk, a floppy disk, floppy disk reader, a solid state drive, a NVME solid state drive, a flash drive, non-volatile computer-readable memory, volatile computer-readable memory, and any other data storage component as may be understood by those who may have skill in the art.

In some embodiments of the system 100 according to the present invention, the user device 118 may include a data memory unit 109. The data memory unit 109 may be carried by the user device 118. The data memory unit 109 may be in communication with one or more of the collaborator unit 105, the power unit 108, the reference data database 101, the reference data 102, the search term database 103, the plurality of search terms 104, the network unit 106, and/or the data storage unit 107. In some embodiments of the present invention, the data memory unit 109 may be part of, and a monolithic component with the collaborator unit 105, the reference data database 101, the search term database 103, and/or the data storage unit 107. The data memory unit 109 may be utilized to read, write, store, copy, index, and/or provide computer-readable data, instructions, code, information, commands, and/or executables to assist in the data retrieval by the collaborator unit 15. Examples of the data memory unit 109 include, without limitation, a random access memory, a non-random access memory, non-volatile computer-readable memory, volatile computer-readable memory, a solid state drive, virtual random access memory, and/or any combination or combinations thereof.

In some embodiments of the system 100 according to the present invention, the user device 118 may include one or more of an audio unit 112. The audio unit 112 may be carried by the user device 118, and/or the audio unit 112 may be attached to the user device 118. In some embodiments of the present invention, the audio unit 112 may be separate and apart from the user device 118. The audio unit 112 may be in communication with and/or couplable in communication with, the collaborator unit 105, the power unit 108, the network unit 106, and/or the network 116. The audio unit 112 may be configured to generate and/or emit audible sound based on sound signals received by the audio unit 112 which may be received from the collaborator unit 105, the network unit 106, and/or the network 116 or through the network 116. The audio unit 112 may also be configured to sense, detect, record, translate, and/or receive audible sounds and generate a recorded sound signal based on the audible sound. The audio unit 112 may send the recorded sound signal to the collaborator unit 105. The audio unit 112 may comprise a speaker 113 and/or a microphone 114. Examples of the audio unit 112 include, but without limitation, a sound system, audio headphones, Bluetooth audio device, voice recorder, speaker, microphone, audio receiver, wireless communication component, volume and playback controls, audio detector / recorder, and/or any other device that may be used as the audio unit 112 to generate, receive, and/or record audio sounds as may be understood by those who may have skill in the art.

In some embodiments of the system 100, the user device 118 may include one or more of a camera unit 115. The camera unit 115 may be carried by the user device 118. However, in some embodiments the camera unit 115 may be separate and apart from the user device 118. The camera unit 115 may be in communication with one or more of the collaborator unit 105, the network unit 106, the network 116, and/or the power unit 108. In some embodiments of the present invention, the camera unit 115 may be couplable in communication with the collaborator unit 105, the network unit 106, the network 116, and/or the power unit 108. The camera unit 115 may be utilized to sense, detect, capture, and/or record, images and/or video of light received in the visual spectrum of light. The camera unit 115 may be configured to send the images and/or video recorded to the collaborator unit 105 and/or the network unit 106, which may be sent via the network 116. Examples of the camera unit 115 include, without limitation, a motion sensor, a camera, a web-camera, a phone camera, a tablet camera, a laptop camera, a point-and-shoot camera, an optical sensor, and/or any other device that may be utilized as the camera unit 115 to sense, detect, capture, and/or record, images and/or video of light received in the visual spectrum of light as may be understood by those who may have skill in the art.

For the purposes of the present invention, the network 116 may be defined to encompass any communication system and/or network for computer-readable code, data, instructions, commands, executables, and/or information as may be understood by those who may have skill in the art. For example, but without limitation, the network 116 may comprise one or more of a Bluetooth connection, a Wi-Fi network / connection, a wired network, a world-wide network, a network server center, a cellular network, cable network, telephone data network, near-field communications, satellite communications, fiber optic communications, radio frequency communication and components, and/or any other device and/or communication system to allow and/or facilitate the communication and transmission of computer-readable data, code, and information as may be understood by those who may have skill in the art.

In some embodiments of the present invention, the user device 118, the collaborator unit 105, the network unit 106, and/or the network 116 may be in communication with and/or via at least one network transceiver 124. The network transceiver 124 may be utilized to facilitate communication to, from, via, and/or between the user device 118, the collaborator unit 105, the network unit 106, the network 116, other user device 125, and/or servers 121. Examples of the network transceiver 124 include, but without limitation, cell tower(s), routers, modems, internet service provider network components, communication towers, communication hubs, communication satellites, and/or any other network component that may be used as the network transceiver and any combination or combinations thereof as may be understood by those who may have skill in the art.

For the purposes of the description of the present invention herein, the reference to other user device 125 may refer to separate user device(s) 118 that may be owned and/or operated by a user other than the user of the user device 118. The other user devices 125 may include similar and/or the same components, functions, operation, and/or features as recited and described regarding the user device 118 herein. More details about other user devices 125 are provided below.

As mentioned above, some embodiments of the present invention may include one or more servers 121 that may be coupled in communication with one or more of the user device 118, the other user device 125, the network 116, the network transceiver 124, the network unit 106, and/or the collaborator unit 105. The one or more servers 121 may comprise third party servers and/or non-third-party servers. The one or more servers 121 store data that may be accessible by the collaborator unit 105 and/or network unit 106 via the network 116 and/or via the network transceiver 124. In some embodiments of the present invention, the server(s) 121 may include a reference data database 101, reference data 102, a search term database 103, a plurality of search terms 104. The server(s) 121 may be operable to conduct an update process to update the reference data 102 and/or the plurality of search terms 104 to define updated reference data 122 and/or an updated plurality of search terms 123. Examples of the one or more server(s) 121 include, but without limitation, a server system, a database, a datacenter, a cloud network, a network station, a server computer, and/or any other device or system that may be used as the server(s) 121 and may be understood by those who may have skill in the art.

The reference data 102 and/or the updated reference data 102 stored by the user device 118, the other user device 125, the reference data database(s) 101, the data storage unit 107, and/or by the server(s) 121 may comprise one or more of user profile data, non-user profile data, publisher data, and product data. User profile data may be data associated with the user of the user device 118. The user profile data may include one or more of input history inputted by the current user, internet search history of the current user, geographic location of the current user, present time of day, present date, current season at the geographic location of the user device, online purchase history by the current user, website browsing history of the current user, type of user device being used, and length of present internet session of the current user.

The non-user profile date may include one or more of an input history of input inputted by other users of other user devices 125, the internet search history of the other users of other user devices 125, geographic location of the other users of other user devices 125, time-stamps of the other users using the other user devices 125, time-stamps of the seasons the other users used the other user devices 125, online purchase history by the other users of other user devices 125, and/or website browsing history of the other users of other user devices 125. The publisher data may be associated with an online product publisher 214 and/or an online retailer 214. The publisher data may include one or more of review ratings of the publisher, publisher website engagement count, publisher priority placement bids, publisher sales history, publisher online sales history, publisher product offerings, publisher online product offerings, publisher geographic location(s), publisher trust rating, and/or publisher success history of online sales.

For the purposes of the description of the present invention, publisher priority placement bids may be defined as online publisher(s) submitting a payment and/or agreeing to a contract for the effect of the online publisher having a higher chance of having its product(s) displayed to users conducting online searches for products with the system 100. The online publishers may also pay to be less associated with particular search queries and/or internet searches. For example, but without limitation, when a user enters a search that defines a search query associated with a political party, the online publisher may have paid for a publisher priority placement bid such that the online publisher's products will not be a result shown to the user of the user device 118.

The product data may be associated with one or more of a good offered online 212 and/or a service offered online 212. The product data may also include one or more of product price, product price history, relative product price to comparable products, product quantity in stock, estimated shipping cost, estimated product shipping speed, product geographic location, product source location, product review rating, product purchase history, product engagement history, product return history, product satisfaction rating, associated supplier, publisher data of the product, and at least one product characteristic. The product characteristic may include one or more of product type, product quality, product associated occasion, product dimensions, product associated use, product brand, product material, product style, product color, and/or product use compatibility.

In some embodiments of the present invention, the reference data 102 may include word knowledge data. In some other embodiments of the present invention, the reference data 102 and/or a portion of the reference data 102 may define word knowledge data. The collaborator unit 105 may be configured to receive and utilize the word knowledge data to perform, function, and/or operate one or more of the features of the collaborator unit 105 as described herein. For example, without limitation, the collaborator unit 105 may utilize the word knowledge data when generating one or more of the output responses 208 and/or when associating the user input(s) 204 with at least a portion of the reference data 102. The word knowledge data may include information which may be structured information and/or unstructured information that the collaborator unit 105 may utilize to perform, function, and/or operate one or more of the features of the collaborator unit 105. The information of the word knowledge data may include instructions for the collaborator unit 105 to implement and/or follow when the collaborator unit 102 conducts internet searches and queries responsive to user inputs 204. For example, without limitation, the information of the word knowledge data may include declarative data regarding product details, procedural data regarding procedures for the collaborator unit 105 to follow to conduct effective searches, meta-data regarding relationships between different data elements, and heuristic data derived from past searches performed by the collaborator unit 105. The collaborator unit 105 may utilize the word knowledge data to the user's intent without extensive amounts of user input(s) 204, identify relevant search results, evaluate the search results, and generate the output responses 208 therefrom.

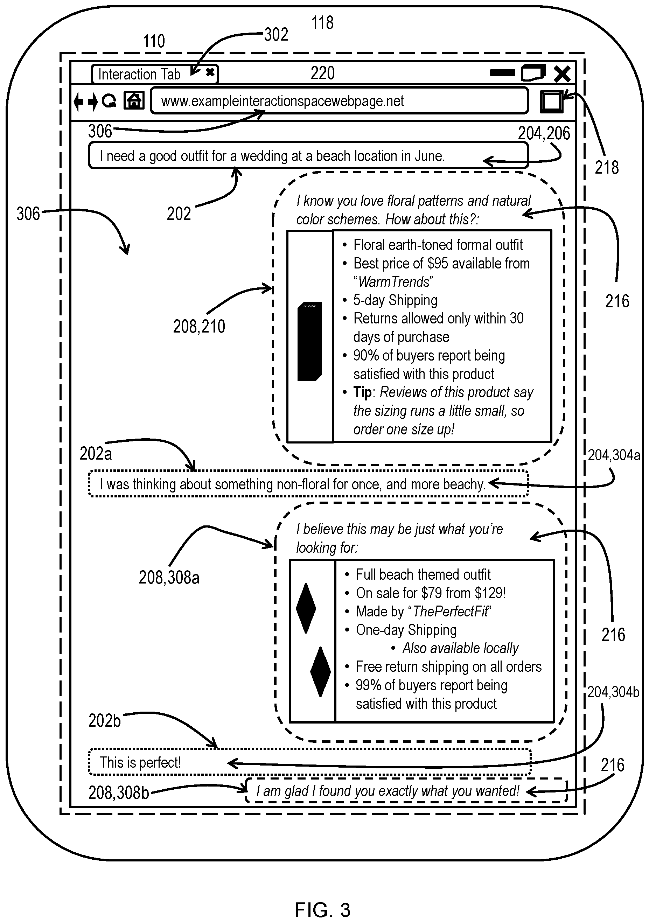

Now referring to FIGS. 1-4, the collaborator unit 105 may be configured to access the reference data database 101 and the search term database 103. The collaborator unit 105 may access and receive at least a portion of the reference data 102 in the reference data database 101 and may access and receive at least a portion of the plurality of search terms 104 in the search term database 103. A user input may be entered into an interaction space 202 using the user device 118. The interaction space 202 may be displayed to, and/or interacted with using the user device 118 by a web browser extension 218 on a web browser 220. The interaction space 118 may be displayed overlaying any webpage 222 that is being displayed by the web browser 220 on the user device 118. To reduce possible confusion by illustratively showing fully populated example webpages 222 in the figures of which the interaction space(s) 202 would overlay, the webpages 222 illustratively shown in the figures are blank webpages 222. In some embodiments of the present invention, the interaction space 202 may be displayed , and/or interacted with using the user device 118 through an interaction space webpage 306 via a web browser 220 of the user device 118, as exemplary and illustratively shown in FIG. 3. The interaction space webpage 306 may be opened on the web browser 220 of the user device 118 in an interaction space internet tab 302. The web browser 220 of the user device 118 may comprise any web browser as may be understood by those who may have skill in the art.

The display unit 110 and/or the input unit(s) 111 may be utilized to enter at least one user input 204 at the user device 118 within the interaction space 202. The user input 204 may comprise one or more of a character, a word, a phrase, a sentence, a spoken language, a speech-to-text input, an image, a webpage, a document, a statement, a request, a point of information, and a question. Upon the user input 204 being entered into the interaction space 202, the user input 204 may be received by the collaborator unit 105. The user input 204 may be associated with a description, and the collaborator unit 105 may be configured to determine and/or identify the description that the user input 204 may be associated with. The description of the user input 204 may comprise one or more of an occasion, a use, a problem, a want, a need, a date, a date of use, a date of receival, a date range, a price, a price range, a geographic location, a good, a good type, a service, a service type, and product traits. The product traits may, for example, without limitation, include quality, reliability, color, style, dimensions, compatibility, popularity, source, provider, and product composition.

The user input 204 that initially entered into the interaction space 202 may be defined as a first user input 206. The first user input 206 can be a first user input 206 for a particular search session, or may also be considered the first user input 206 if the search session is broken into multiple sessions relating to a particular search topic. For example, if a user is searching for an item, but conducts an initial search during one session, and continues the search during another session, i.e., closing out a web browser 220 after an initial search was conducted, and re-opening the web browser 220 to continue the search, the initial search query can be determined to be the first user input 206. The collaborator unit 105 may be configured to compare and match the user input 204 and/or the first unit input 206 that has been received by the collaborator unit 105 to at least a portion of the plurality of search terms 104, which may be to define a query input and/or a first query input. The collaborator unit 105 may associate the query input and/or the first query input with at least a portion of the reference data 102. The collaborator unit 105 may also generate an output response 208 and/or a first output response 210 based on the portion of the reference data 102 that may be associated with the query input and/or the first query input. The collaborator unit 105 may be configured to send the output response 208 and/or the first output response 210 to the display unit 110 and/or the user device 118 to be displayed thereby for the user's view.

The collaborator unit 105 may also be configured to receive one or more additional user inputs 204 that may be entered into the interaction space 202 after an output response 208 and/or the first output response 210 is generated and displayed by the collaborator unit 105. The additional user input(s) 204 received by the collaborator unit may be referred to as a refined user input 204. The collaborator unit 105 may be configured to compare and match the refined user input 204 to the plurality of search terms 104 to define a refined query input. The collaborator unit 105 may also associate the refined query input with at least a portion of the reference data 102 and/or with the previous output response 208 and/or with the first output response 210 to generate another output response 208, which may be referred to as a refined output response 208. The collaborator unit 105 may send the other output response 208 and/or the refined output response 208 to be displayed by the user device 118 and/or the display unit 110.

In some embodiments of the present invention, the collaborator unit 105 may be configured to create, edit, and/or update the user profile data of the reference data associated with the user of the user device with one or more of the user input(s) 204, the first user input 206, the first query input, the output response(s) 208, the first output response 210, the other / additional user input 204, the refined user input 204, the refined query input, and/or the refined output response 208. In preferred embodiments of the present invention, the collaborator unit 105 may be configured to retain and not send at least a portion of the user profile data of the user outside of the confines and/or data storage of the user device 118. For example, but without limitation, the collaboration unit 105 may be configured to retain portions of the user profile data within the confines of the user device 118 related to one or more of personal information of the user, name of the user, billing information of the user, identification information of the user, full mailing address of the user, and/or other information about the user that is irrelevant to online shopping and online shopping trends and recommendations. However, in other embodiments, the collaborator unit 105 may be configured to retain all of the user profile data within the local storage of the user device 118, of which being the local reference data database 101 and/or the local data storage unit 107 that is/are carried by the user device 118.

In some embodiments of the present invention, the collaborator unit 105 may be configured to determine and identify if a user input 204 comprises a user history request. The collaborator unit 105 may match the user history request to a least a portion of the user profile data to identify and associate portion(s) of the user profile data to the user history request. The collaborator unit 105 may be configured to send the associated portion(s) of the user profile data to be displayed by the user device 118 and/or the display unit 110.

In some embodiments of the present invention, the collaborator unit 105 may be configured to define the query input(s), first query input(s), other / additional query input(s), and/or refine query input(s) as a list of matched search terms and/or list of matched refined search terms when comparing and matching the user input(s) 204, first user input(s) 208, additional /other user input(s) 204, and/or refined user input(s) 204 to the plurality of search terms 104.

In some embodiments of the present invention, the plurality of search terms 104 may be associated with one or more of a search parameter. Each search parameter may comprise one or more of a good constraint, a good type constraint, a service constraint, a service type constraint, a geographic location constraint, a weather constraint, a season constraint, a use indication constraint, a problem indication constraint, a cost constraint, a time constraint, a good characteristics constraint, a service characteristics constraint, and a source constraint.

In some embodiments of the present invention, the collaborator unit 105 may be configured to perform an interpretation process to determine one or more of a correlation between the user input(s) 204 (which may include the first user input(s) 206, the other / additional user input(s) 204, and/or the refined user input(s) 204), the plurality of search terms 104, and at least a portion of the reference data 102. The collaborator unit 105 may be configured to compare and match the user input(s) 204, the first user input(s) 206, the other / additional user input(s) 204, and/or the refined user input(s) 204 to the plurality of search terms 104 based on the one or more correlations to define the query input(s), the other / addition query input(s), and/or the refined query input(s).

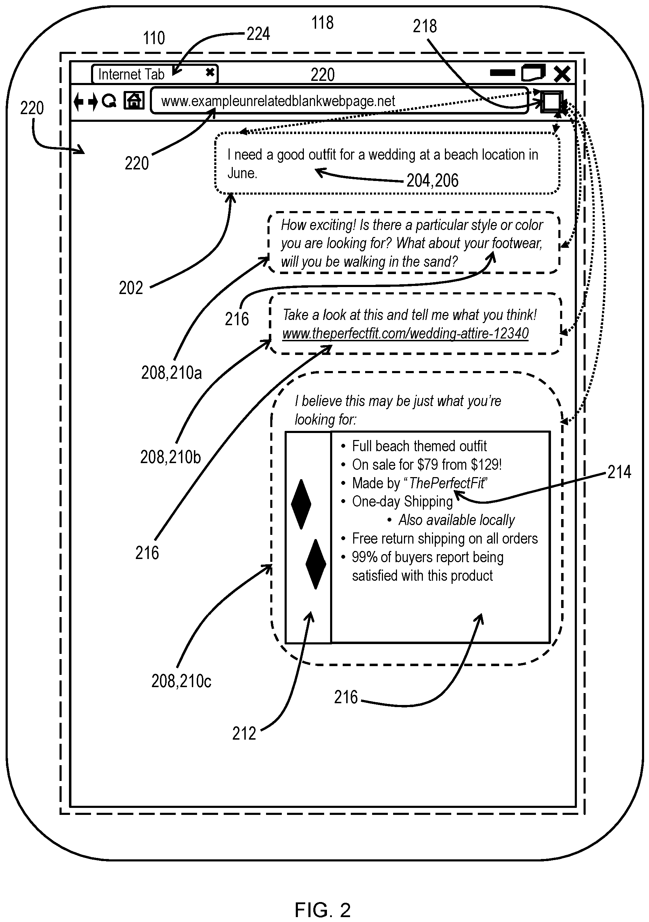

Now referring to FIGS. 2-7 and 11, the collaborator unit 105 may generate an output response 208 responsive to a user input 204 entered into the interaction space 202. For the purposes of the description of the various embodiments of the present invention, the term output response 208 and/or output response(s) 208 may be used to refer to a first output response 210, first output response(s) 210, refined output response 208, refined output response(s) 208, output response 208, and/or output response(s) 208 individually, in combination, and/or in any combinations thereof without any limitation thereby.

The collaborator unit 105 the output response 208 generated by the collaborator unit 105 may comprise of one or more of a prompt 216 and/or a landing page 502. The prompt 216 may be displayed at the user device 118 and/or by the display 110 at the interaction space 202 and/or adjacent to the interaction space 202. The prompt 216 may include one or more of a conversation indicator and/or a product listing. The conversation indicator may comprise one or more of a statement, a question, an assertion, a declaration, an explanation, an exclamation, an answer, and/or a command. Without limitation, examples of the conversation indicator can be seen in the output responses 208 and/or the first output response 210a-c illustratively shown in FIG. 2. For example, and without limitation, the output response 208, 210a illustratively shows a conversation indicator comprising "How exciting! Is there a particular style or color you are looking for? What about your footwear, will you be walking in the sand?" For another example, and without limitation, the output response 208, 210b illustratively shows a conversation indicator comprising "Take a look at this and tell me what you think!" For yet another example, and without limitation, the output response 208, 210c shows a conversation indicator comprising "I believe this may be just what you're looking for:".

The product listing of the conversation indicator may comprise one or more of a hyperlink, a product advertisement, and/or a product description. Without limitation, examples of the product listing can be seen in the output responses 208 and/or the first output responses 210b-c illustratively shown in FIG. 2. For example, and without limitation the output response 208, 210b illustratively shows a product listing comprising "www.theperfectfit.com/wedding-attire-12340." For another example, and without limitation, the output response 208, 210c illustratively shows a product listing comprising an image of a product/good offered online with a product description that comprises "full beach themed outfit," "On sale for $79 from $129!," "Made by 'ThePerfectFit'," "One-day shipping," "Also available locally," "Free return shipping on all orders," and "99% of buyers report being satisfied with this product."

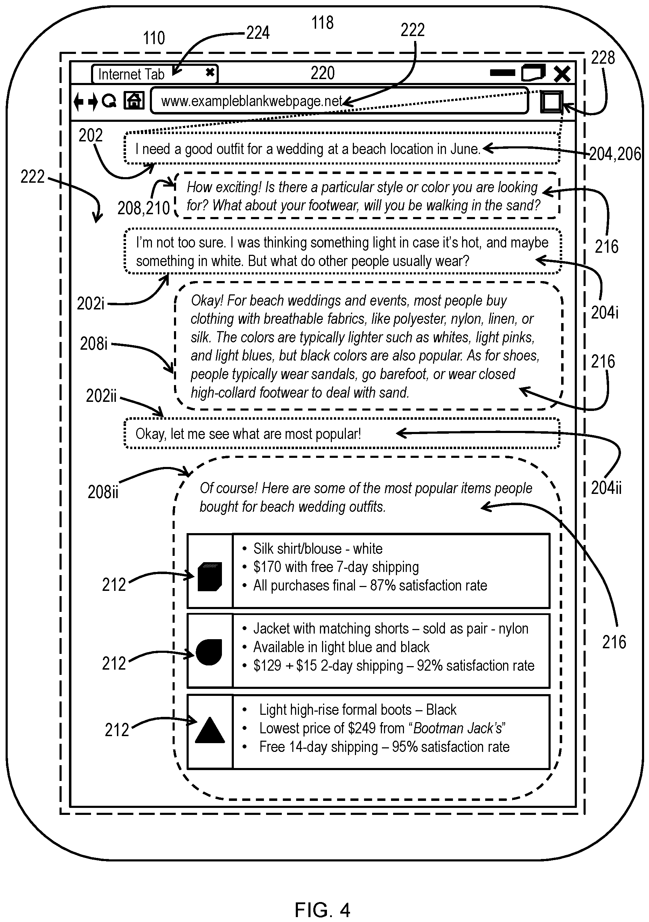

In some embodiments of the present invention, the conversation indicator of the prompt 216 of the response output 208 may include a cue. The cue may comprise a request for one or more of, a user input 204 to be entered into the interaction space 202 to refine the output response(s) 208, and/or an inquiry for the user to accept the output response 208 and/or the most recent displayed output response 208 by entering a user input 204 into the interaction space 202 responsive to the cue. For example, and without limitation, as illustratively shown in FIG. 4, the user may enter a user input 204 into the interaction space 202 and the collaborator unit 105 may generate an output response 208, 210 associated with the user input 204 of "I need a good outfit for a wedding at a beach location in June," the output response 208, 210 comprising a prompt 216 that comprises a conversation indicator that includes "How exciting! Is there a particular style or color you are looking for? What about your footwear, will you be walking in the sand?" The cue of the conversation indicator includes the phrases "Is there a particular style or color you are looking for? What about your footwear, will you be walking in the sand?" Specifically, the cue requests for the user to input a user input 204 into the interaction space 202 to refine the output response(s) 208, 210. In response to the cue, the user of the user device 118 may enter a user input 204 that may comprise, for example, "I'm not too sure. I was thinking something light in case it's hot, and maybe something in white. But what do other people usually wear?"

Referring now to FIG. 3, and example is provided of a cue that includes an inquiry for the user to accept the output response 208 and/or the most recent displayed output response 208 by entering a user input 204 into the interaction space 202. As illustrated, the user may enter a user input 204, 206 into the interaction space 202, and the collaborator unit 105 may generate an output response 208, 210. In this example, the user input 204, 206 is "I need a good outfit for a wedding at a beach location in June." The collaborator unit 105 may generate an output response 208, 210 to be displayed including a prompt 216 that includes a conversation indicator and a product listing. The conversation indicator, in this example, may illustratively include a cue, such as "How about this?:" This may be considered a request for the user to accept the output response 208, 210 by entering a user input 204 into the interaction space 202. The user may accept the output response 208, 210 responsive to the cue of the prompt 216 by entering a user input 204, 304a into the interaction space 202a which may then be interpreted by the collaborator unit 105 as an acceptance of the output response 208, 210. For example, as illustratively shown in the interaction space 202b of FIG. 3, the user may enter a user input 204, 304b comprising "This is perfect!" to accept an output response 208, 210 responsive to the cue.

Alternatively, the user input 204 responsive to the cue and/or the output response 208, 210 may, for example, comprise an indication of non-acceptance as illustrated in interaction space 202a with a user input 204, 304a indicating that an alternative result is desired, i.e., "I was thinking about something non-floral for once, and more beachy." A user input 204 entered in response to an output response 208, which does not comprise an acceptance of the output response 208, 210, may define a refined user input 204, such as user input 204, 304a illustrated in interaction space 202a, which may define a refined user input 204, 304a.

The collaborator unit 105 may determine that the user input 204, 304a entered into the interaction space 202a following an output response 208 comprises either an acceptance of the output response 208 or a non-acceptance of the output response 208 (and thus a refined user input 204) by interpreting and identifying if the user input 204, 304a comprises one or more of acceptance terms. For example, without limitation, the acceptance terms may include "Great," "Perfect," "Exactly," "Just was I was looking for," "Good job," "Stop," "End," "I pick that one," and any other terms that may be interpreted as acceptance terms as may be understood by those who may have skill in the art. As can be seen, a user input 204, 304a that indicates non-acceptance of the result produces another output response 208a with alternative results.

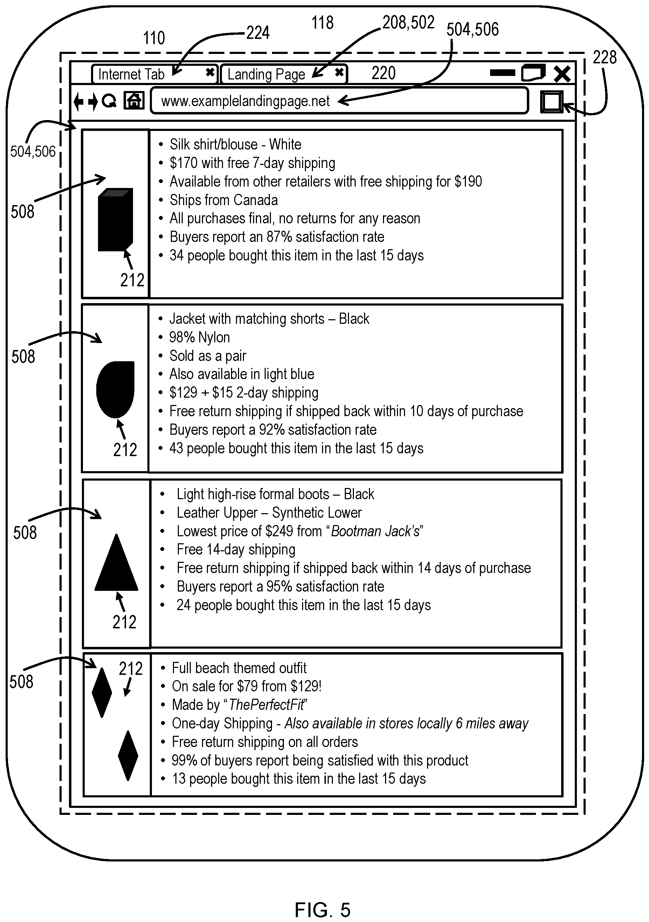

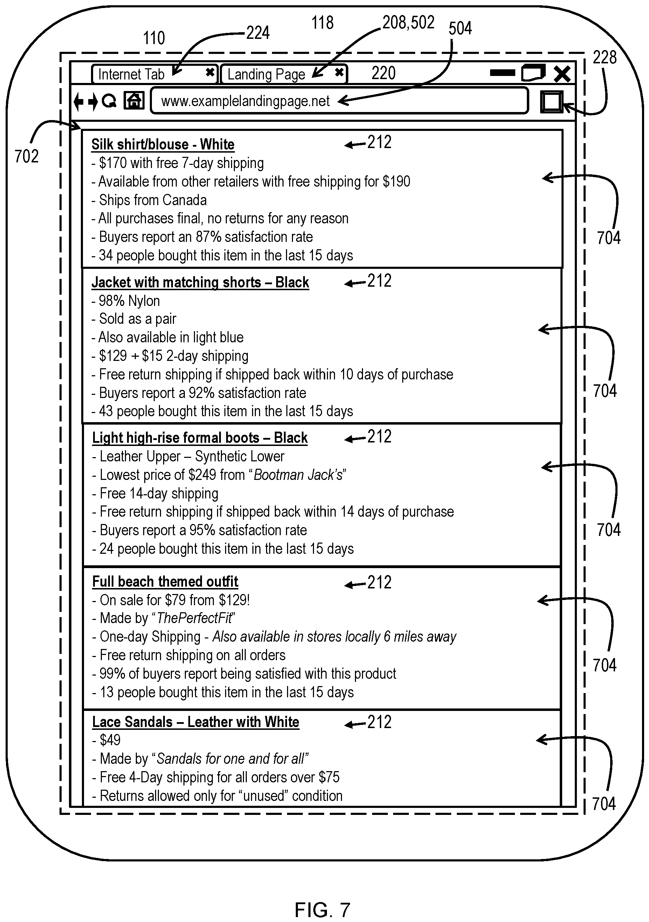

Now referring more specifically to FIGS. 5-7, the output response 208 may comprise a landing page 502. The landing page 502 may be displayed at the user device 118 and/or the display 110 by directing the user to the landing page 502 on the web browser 220, and/or by opening a new web browser internet tab 224 of the web browser 220, so that the new internet tab 224 brings the user to the content of the landing page 502. The landing page 502 may comprise one or more of a product offering webpage, a goods offering webpage, a service offering webpage, a publisher website, a retailer website, a merchant webpage 602, a product review webpage, a product discussion webpage, and/or a formulated webpage 504. The formulated webpage 504, shown in FIGS. 5 and 7, may comprise a formulated offering webpage 506 and/or a formulated directory webpage 702.

The formulated offering webpage 506 may comprise a list of formulated offerings 508 generated by the collaborator unit 105 when associating the query input(s) 204 with at least a portion of the reference data 102 and/or with previous output response(s) 208, 210. Each of the formulated offerings 508 may comprise a product listing that may include one or more of a hyperlink, a product advertisement, and/or a product description, as may be illustratively seen in FIG. 5. Each of the formulated offerings 508 may be associated with one or more of a good and/or service offered online 212, and each of the formulated offerings 508 may be associated with one or more of a product offering webpage, a goods offering webpage, a service offering webpage, a publisher website, a retailer website, a merchant webpage, a product review webpage, and/or a product discussion webpage.

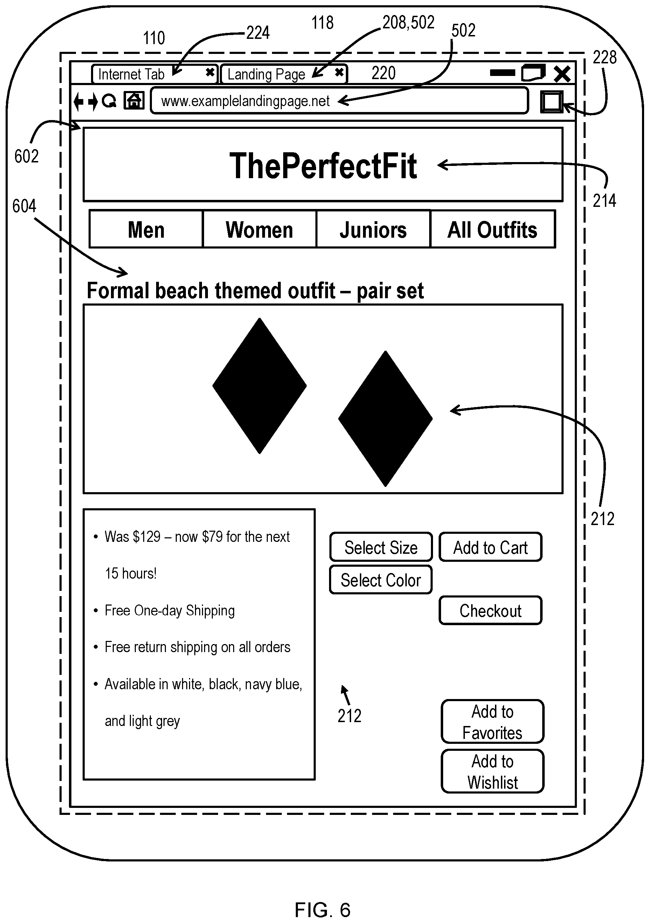

An exemplary embodiment of the merchant webpage 602 is illustrated in FIG. 6. For the purposes of the present invention, the term "merchant webpage 602" may be used without limitation to refer to any one or more of a website, webpage, advertiser webpage/website, retailer website/webpage, publisher website/webpage, product offering webpage/website, product review webpage/website, product discussion webpage/website, and/or offering webpage/website related to any product(s), good(s), and/or service(s) which may be offered to purchase or sale online. The merchant webpage 602 may comprise a merchant offering 604 of the reference data 102 that may be associated by the collaborator unit 105 with the user input(s) 204 and/or the output response(s) 208. The merchant webpage 602 of the reference data 102 to be displayed as the landing page 502 may be determined by the collaborator unit 105 to be the top matched merchant webpage 602 based on the user input(s) 204 and/or the output response(s) 208. The merchant offering 604 on the merchant website 602 may comprise a good and/or service offered online 212 that may be determined by the collaborator unit 105 to be the top matched merchant offering 604 based on the user input(s) 204, the output response(s) 208, and/or the reference data 102. The merchant offering 604 and/or merchant webpage 602 may include product data, such as, but without limitation, one or more of product price, product price history, relative product price to comparable products, product quantity in stock, estimated shipping cost, estimated product shipping speed, product geographic location, product source location, product review rating, product purchase history, product engagement history, product return history, product satisfaction rating, associated supplier, publisher data of the product, and at least one product characteristic; and wherein the at least one product characteristic includes at least one of product type, product quality, product associated occasion, product dimensions, product associated use, product brand, product material, product style, product color, and/or product use compatibility.

An exemplary embodiment of the formulated directory webpage 702 may be illustratively seen in FIG. 7. The formulated directory webpage 702 may comprise of formulated directories 704 that may be generated by the collaborator unit 105 when associating the query input(s) 204 with at least a portion of the reference data 102 and/or with previous output response(s) 208, 210, as further illustrated in FIG. 3. Each of the formulated directories 704 may comprise a product listing that may include one or more of a hyperlink, a product advertisement, and/or a product description. In some embodiments of the present invention, the formulated directories 704, in contrast to the formulated offerings 508, may include less information. For example, but without limitation, the formulated directories 704 may not include an image depicting the good and/or service offered online 212 associated with the formulated directory 704.

In some embodiments of the present invention, the collaborator unit 105 may be restricted when generating each output response 208 such that, each output response 208 generated by the collaborator unit 105 may only be based on the portion(s) of the reference data 102 that the collaborator unit 105 associated with the query input defined from the user input 204 entered immediately preceding that output response 208. For example, but without limitation, if there is a first unit input 204, 206 for which the collaborator unit 105 responsively has generated an output response 208, 210 associated with that user input 204, 206, and there is then a second user input 204 entered into the interaction space 202, the collaborator unit 105 may only associate that second user input 204 with a portion of the reference data 102 to generate another output response 208 to be displayed at the user device 118.

The formulated offering webpage 506 may comprise a list of formulated offerings 508 generated by the collaborator unit 105 when associating the query input(s) 204 with at least a portion of the reference data 102 and/or with previous output response(s) 208, 210. Each of the formulated offerings 508 may comprise a product listing that may include one or more of a hyperlink, a product advertisement, and/or a product description, as may be illustratively seen in FIG. 5. Each of the formulated offerings 508 may be associated with one or more of a good and/or service offered online 212, and each of the formulated offerings 508 may be associated with one or more of a product offering webpage, a goods offering webpage, a service offering webpage, a publisher website, a retailer website, a merchant webpage, a product review webpage, and/or a product discussion webpage.

As discussed above, the collaborator unit 105 may be operable to generate an output response 208 based upon one or more of the user input(s) 204, the query input(s), previous output response(s) 208, and/or the associated portion(s) of reference data 102. In some embodiments of the present invention, the generation of an output response 208 by the collaborator unit 105 may include the collaborator unit 105 determining a top matched portion of the product data, and generating the output response 208 based upon the top matched portion of the product data. The collaborator unit 105 may determine the top matched portion of the product data based upon one or more relevancy scores that may each be associated with one or more portion(s) of the reference data 102 that are associated with one or more of the user input(s) 204, the query input(s), and/or previous output response(s) 208 by the collaborator unit 105, which may be referred as, without limitation, as the associated relevancy score(s). The collaborator unit 105 may determine and identify the associated relevancy score(s) by performing a relevancy process. The relevancy process may comprise performing one or more of content-based filtering, semantic understanding filtering, popularity factor filtering, collaborative filtering, personalization filtering, product knowledge graph refinement filtering, platform business objectives filtering, and/or long-term value filtering.

The content-based filtering may comprise matching the query input(s) to one or more portion(s) of the reference data 102. For example, without limitation, matching the query input(s) to one or more portion(s) of the reference data 102 may comprise matching the search term(s) / list of matched search term(s) of the query input(s) to the product data define a content-based relevancy score that may define at least a portion of the relevancy score of each of the portion(s) of the reference data 102.

The semantic understanding filtering may comprise performing an input interpretation process on the user input(s) 204. The input interpretation process may comprise determining and identifying a list of matched semantic search terms related to the user input(s) 204 based on at least a portion of the reference data 102. The collaborator unit 105 may match the list of matched semantic search terms to the product data to define a semantic-based relevancy score. The semantic-based relevancy score may define at least a portion of the relevancy score of each of the portion(s) of the reference data 102.

The popularity factor filtering may comprise identifying and determining a popularity-based score associated with at least one portion of the product data of the reference data 102. The collaborator unit 105 may identify and determine the popularity-based score associated with the portions of the product data based on the respective total numbers of each product that has been sold and/or the respective total numbers of each product that has been sold within a predetermined period of time, such as, without limitation a predetermined period of time comprising the last 3 months. The popularity-based score associated with each portion of the product data may define at least a portion of the relevancy score of each portion of the reference data 102.

The collaborative filtering may comprise identifying and determining a collaborative-based score associated with each portion of the product data. The collaborative-based score may be identified and determined by the collaborator unit 105 by identifying and determining a popularity-based score associated with each portion of the product data as describe above, and also by filtering the popularity-based score based on a relation score associated with each portion of the product data. The relation score may be defined by one or more of a matched user-product data, a matched product-product data, a matched non-user-product data, and/or in any combination thereof. The matched user-product data may be determined and identified by the collaborator unit 105 by matching non-user product purchase history related to the product purchase history of the user in the user profile data. The matched product-product data may be determined and identified by the collaborator unit 105 by matching product data regarding two or more products offered online that are frequently purchased together with one or more of the user input 204 and the query input. The matched non-user-product data may be determined and identified by the collaborator unit 105 by matching at least a portion of the user profile data to portions of the non-user profile data to determine the non-user-profile data based on purchase patterns of other users matched to the user profile data. The collaborative-based score associated with each portion of the product data may define at least a portion of the relevancy score of each portion of the reference data 102.

The personalization filtering may comprise identifying and determining a personalization-based score associated with each portion of the product data. The personalization-based score associated with each portion of the product data may be identified and determined by the collaborator unit 105 by comparing and matching portions of the user profile data relating to user product purchase history to a least a portion of the product data, to define a matched user product data. The collaborator unit 105 may define the personalization-based score associated with each portion of the product data based on the matched user product data. The personalization-based score associated with each portion of the product data may define at least a portion of the relevancy score of each portion of the reference data 102.

The product knowledge graph refinement filtering may comprise the collaborator unit 105 being configured to identify product relation data from the reference data 102 related to data regarding one or more of products that may be substantially similar to one another, products that may often be substituted for one another, products that may complement one another, and products that may be irrelevant in relation to one another. The collaborator unit 105 may define a product knowledge-based score associated with one or more products of the product data based on the product relation data. The product knowledge-based score may define at least a portion of the relevancy score of each portion of the reference data 102.

The platform business objective filtering may comprise the collaborator unit 105 being configured to identify a business objective score based on business objective data of the reference data 102. The business objective data may comprise data related to one or more of an advertisers that paid for greater visibility for one or more of its products, advertisers that have had its product data and/or publisher data recently included in the reference data 102, and/or product(s) of advertisers and/or advertisers that may be associated with relatively higher product sales. The business objective data may also comprise data related to advertiser(s) and/or product(s) of advertisers that may be associated with a predetermined visibility level chosen based on one or more predetermined visibility decisions which may include an objective visibility decision and/or a subjective visibility decision. The business objective data may also include data related to the length of time that an advertiser has paid to have its product data and/or publisher data incorporated into the reference data 102.

Now specifically referring to FIG. 2, a user input 204 may be entered into the interaction space 202 displayed on a web browser 220 of a user device 118. The user input 204 initially entered may define a first user input 206, as illustratively shown in FIG. 2 as user input 204, 206. Here, for example, the user input 204, 206 is illustratively shown as "I need a good outfit for a wedding at a beach location in June." Responsive to the user input 204, 206, the collaborator unit 105 may generate and display an output response 208 at the user device 118 which may comprise a prompt 216. The prompt 216 may include a conversation indicator and/or a product listing. The initial output response 208 generated and displayed by the collaborator unit 105 in response to an initial user input 204, 206 may be defined as a first output response 210. For example, without limitation, three alternative output responses 208 which may define three alternative first output responses 210 may be generated and displayed by the collaborator unit 105 in response to the user input 204, 206 may comprise output response 208, 210a, output response 208, 210b , and/or output response 208, 210c as illustratively shown in FIG. 2.

The output response 208, 210a is an example of an output response 208 that comprises a prompt 216 having a conversation indicator that includes a cue for an inquiry and/or a request for another user input 204 to be entered into the interaction space 202 to refine an output response(s) 208, to define a refined user input 204, i.e. the cue here comprises "Is there a particular style or color you are looking for? What about your footwear, will you be walking in the sand?" The collaborator unit 105 may generate this output response 208, 210a when, for example and without limitation, when the user input 204, 206 is too vague such that the portion of the reference data 102 associated with the query input related to the user input 204, 206 is larger than and/or equal to a predetermined maximum reference data association amount. For another example, without limitation, the collaborator unit 105 may generate output response 208, 210a when the portion of the reference data associated with the query response related to the user input 204, 206 would cause the output response 204 generated therewith to be larger than and/or equal to a predetermined maximum output response size. For yet another example, without limitation, the collaborator unit 105 may generate output response 208, 210a when the portion of the reference data associated with the query response related to the user input 204, 206 would cause the output response 204 generated therewith to include product listings with product data that varies greater than and/or equal to a predetermined product data variance maximum.

The output response 208, 210b is an example of an output response 208 that comprises a product listing comprising a hyperlink, i.e. "www.theperfectfit.com/wedding-attire-12340," and a prompt 216 that comprises a conversation indicator which includes a cue for a request and/or inquiry for another user input 204 to be entered into the interaction space 202 to indicate an acceptance or non-acceptance of the product listing shown in the output response 208, 210b, i.e. the cue here comprises "Take a look at this and tell me what you think!" The collaborator unit 105 may generate output response 208, 210b when the portion of the reference data associated with the input query related to the user input 204, 206 results in a single and/or a few product listings that is/are unable to be represented other than as a hyperlink in the output response 208, 210b rather than as a product advertisement and/or as a product description for one or more reasons. The reasons that the product listing may only be represented as a hyperlink may include, without limitation, that the associated product data of the reference data 102 is unable to be displayed as a product advertisement and/or as a product description such as, without limitation a product review webpage, a product discussion webpage, and/or a lack of product data associated with the good(s) / service(s) offered online 212 equal to and/or below a predetermined product data minimum amount.

The output response 208, 210c is an example of an output response 208 that comprises a product listing and a prompt 216 that includes a conversation indicator which does not have a cue. The product listing of output response 208, 210c includes a hyperlink, a product advertisement, and a product description. Any portion of the product listing may include a hyperlink to a landing page associated with the good(s) / service(s) offered online 212 related to the product listing, e.g. any part of the product image, product advertisement, and/or the product description may include a hyperlink that may be interacted with to open and display the landing page associated with the good(s) / service(s) offered online 212 related to the product listing. The conversation indicator of the prompt 216 of output response 208, 210c, without limitation, does not include a cue and instead only includes a statement, assertion, declaration, and/or an answer, i.e. "I believe this may be just what you're looking for:." The collaborator unit 105 may generate and display an output response 208 having a product listing, such as the product listing illustratively shown by output response 208, 210b in FIG. 2, when the portion of the reference data associated with the input query related to the user input 204, 206 results in a single and/or a few product listings that include(s) an associated product data amount that is equal to and/or above a predetermined product data minimum amount. Also, the collaborator unit 105 may generate and display an output response 208 with a prompt 216 having a conversation indicator, such as the conversation indicator illustratively shown by output response 208, 210c in FIG. 2, when the collaborator unit 105 determines that the product listing(s) of the output response 208 has a relevancy score that is between a predetermined high relevancy score and a predetermined low relevancy score such that the collaborator unit 105 does not include a cue in the conversation indicator to inquire and/or request for another user input 204 to be entered into the interaction space 202 to accept the output response 204, 210c or for a refined user input 204 to be entered into the interaction space 202 to generate and display a refined output response 208.

Now specifically referring to FIG. 3, a user input 204 and/or first user input 206 ("user input 204, 206") may be entered into the interaction space 202 of an interaction space webpage 306 on a web browser 220 via a user device 118 as illustratively depicted in FIG. 3. However, without limitation, it is contemplated that the interaction space 202 may also instead be an overlay on any webpage 222 of a web browser 220 as mentioned further above. The user input 204, 206 may comprise, for example and without limitation, "I need a good outfit for a wedding at a beach location in June," as illustratively shown in FIG. 3. The user input 204, 206 may be received by the collaborator unit 105, and responsive to the user input 204, 206, the collaborator unit 105 may generate and display an output response 208 at the user device 118 which may comprise a prompt 216. The prompt 216 may include a conversation indicator and/or a product listing. The initial output response 208 generated and displayed by the collaborator unit 105 in response to an initial user input 204, 206 may be defined as a first output response 210. However, for the purposes of the description of the present invention, the terms output response 208 and first output response 210 may be referred to as an output response 208, 210 in combination and/or individually without any limitation. Here, without limitation, the output response 208, 210 generated and displayed by the collaborator unit 105 responsive the user input 204, 206 may comprise a prompt 216 that includes a product listing and a conversation indicator that includes a cue. Since the output response 208, 210 generated by the collaborator unit 105 may be via the collaborator unit 105 comparing and matching the user input 204, 206 to the search terms 104 to define a query input, and associating the query input with at least a portion of the reference data 102, the reference data 102 may include user profile data, non-user profile data, publisher data, and/or product data that may indicate that the user of the user device 118 would prefer a floral patterned good offered online 212 with natural color-schemes over goods with other patterns and/or colors.

As shown in the exemplary output response 208, 210 illustrated in FIG. 3, based on the user profile data of the reference data 102, upon the collaborator unit 105 associating the query input to at least a portion of the reference data 102 a "Floral earth-toned formal outfit" is referenced by the collaborator unit 105 from the reference data 102 to generate the product listing of the output response 208, 210. For example, without limitation, the user profile data of the reference data 102 may show that the user of the user device 118 purchases goods offered online 212 that have floral patterns and/or natural color-schemes at a rate higher than goods offered online 212 purchased by the user that do not have floral patterns and/or natural color-schemes.

The collaborator unit 105 may also generate similar kinds of output responses 208, 210 based on different data associated by the collaborator unit 105 when associating the query response to the reference data 102. For example, without limitation, the non-user profile data of the reference data 102 may indicate that for beach weddings and/or beach weddings that happen during the month of June, that people generally purchase clothing, outfits, attire, and/or other goods offered online 212 that having floral patterns, natural color-schemes, and/or any other pattern, color, or product characteristic or quality as may be understood by those who may have skill in the art.

The conversation indicator of the output response 208, 210 may include, for example and without limitation, the statement, assertion, answer, and/or explanation of "I know you love floral patterns and natural color schemes," generated by the collaborator unit 105 based on the input query association with the reference data 102, as illustratively shown in FIG. 3. The cue of the conversation indicator generated by the collaborator unit 105 may comprise, without limitation, "How about this?:" which may indicate a request and/or inquiry for an acceptance of the output response 208, 210 by entering an additional user input 204 into the interaction space 202, and/or which may indicate a request and/or inquiry for an additional user input 204 to be entered into the interaction space to refine the search as a refined user input 204.

The user input 204 ("user input 204, 304a") entered into the interaction space 202 ("interaction space 202, 202a") may comprise, for example and without limitation, "I was thinking about something non-floral for once, and more beachy." As mentioned above, embodiments of the present invention may be configured to facilitate and conduct internet searches and queries with user inputs 204 that may be more akin to typical speech and grammar as if the user is talking to another person and not a system, such as system 100. Also, for the purposes of the disclosures of the present invention, although the figures, such as FIGS. 3-4, show what illustratively may seem to be multiple interaction spaces 202 displayed on the web browser 220 and/or webpage 222, 306, it should be understood that the user inputs 204 may each be made into the same interaction space 202 positioned at a single position at the web browser 220, and/or the interaction space 202 may move below each user input 204 entered and/or each output response 208 generated and displayed, as if a continual list, such as, without limitation, a chain of emails and/or list of a cellular phone text conversation as may be understood by those who may have skill in the art.

The user input 204, 304a entered into the interaction space 202, 202a may be received by the collaborator unit 105. The collaborator unit 105 may interpret the user input 204, 304a to determine whether the user input 204, 304a indicates an acceptance of the output response 208, 210 and/or comprises a refined user input 204. As illustratively shown in FIG. 3, the collaborator unit 105 may interpret and determine that the user input 204, 304a comprises a refined user input 204 and only a refined user input 204 by identifying that the user input 204, 304a does not include any acceptance terms. The collaborator unit 105 may compare and match the user input 204, 304a and/or the refined user input 204, 304a with the search terms 104 to define a query input, which may also be referred to as a refined query input without limitation. The collaborator unit 105 may associate the query input with at least a portion of the reference data 102 to generate and display an additional output response 208, 308a. In some embodiments of the present invention, the collaborator unit 105 may also associate the query input with one or more of the user inputs 204, the other output responses 208, and/or the other query inputs to generate and display an additional output response 208, such as, and without limitation, the output response 208, 308a illustrated in Fig. 3.

The collaborator unit 105 may be operable to receive another user input 204, 304b after the output response 208, 308a is generated and displayed by the collaborator unit 105 at the user device 118. Another user input 204 may be entered into the interaction space 202b displayed at the web browser 220 of the user device 118. The user input 204, 304b may comprise, for example and without limitation, "This is perfect!" The collaborator unit 105 may receive the user input 204, 304b, and may identify if the user input 204, 304b comprises acceptance terms to indicate an acceptance of the previous output response 208, 308a. As illustrated in FIG. 3, the collaborator unit 105 identifies and determines that the user input 204, 304b comprises acceptance terms and indicates an acceptance of the previous output response 208, 308a. Upon the collaborator unit 105 determining that the user input 204, 304b comprises acceptance terms, the collaborator unit 105 may generate a final output response 208 that may comprise a prompt 216 with a conversation indicator, such as, and without limitation, "I am glad I found you exactly what you wanted!"

Now specifically referring to FIG. 4, the interaction space 202 may be operable for a user input 204 to be inputted and entered therewith. As illustratively shown in FIG. 4, the user input 204, 206 may comprise "I need a good outfit for a wedding at a beach location in June." The collaborator unit 105 may receive the user input 204, 206, and may compare and match the user input 204, 206 to the search terms 104 to define a query input. The collaborator unit 105 unit may associate the first query input with a least a portion of the reference data 102 to generate an output response 208 to be displayed at the user device 118. For example, without limitation, the collaborator unit 105 may generate output response 208, 210 to be displayed at the user device 118 based on the collaborator unit 105 associating the user input 204, 206 with the reference data 102, as illustratively shown in FIG. 4. The output response 208, 210, may include a prompt 216 having a conversation indicator which includes a cue of "How exciting! Is there a particular style or color you are looking for? What about your footwear, will you be walking in the sand?" Specifically, here, the cue of the conversation indicator comprises "Is there a particular style or color you are looking for? What about your footwear, will you be walking in the sand?"

As similarly discussed above in FIG. 2 regarding the example output response 208, 210a, the collaborator unit 105 may generate an output response 208 such as output response 208, 210 when, for example and without limitation, the user input 204, 206 is too vague such that the portion of the reference data 102 associated with the query input related to the user input 204, 206 is larger than and/or equal to a predetermined maximum reference data association amount. Thus, without limitation, in this example instance, the collaborator unit 105 may generate an output response 208 that does not include a product listing, and instead generates and displays an output response 208, such as output response 208, 210, that only includes a prompt 216 with a conversation indicator having a cue for an inquiry and/or a request for another user input 204 to be entered into the interaction space 202 to be utilized by the collaborator unit to refine and generate another output response(s) 208 with a product listing, and which may define a refined user input 204.

The collaborator unit 105 may be operable to receive an additional user input 204 entered into the interaction space 202 (interaction space 202i) following the generation and display of the output response 208, 210 at the user device 118, such as, without limitation, user input 202i for "I'm not too sure. I was thinking something light in case it's hot, and maybe something in white. But what do other people usually wear?" As discussed previously, the collaborator unit 105 may identify and determine whether the user input 204i comprises an acceptance of the output response 216 or a refined user input 204. As illustratively shown in FIG. 4, for example and without limitation, the collaborator unit 105 identifies and determines that the user input 204i does not comprise any acceptance terms and thus comprises a refined user input 204. The collaborator unit 105 may compare and match the user input 204i with the search terms 104 to define a query input, which also may be referred to as a refined query input. The collaborator unit 105 may associate the refined query input with at least a portion of the reference data 102 to generate another output response 208 to be displayed at the user device 118, such as output response 208i. In some embodiments of the present invention, the collaborator unit 105 may associate the refined query input with one or more of the user input(s) 204, the output response(s) 208, and/or the previous query input(s) to generate and display another output response 208 at the user device 118, such as output response 208i.

For example and without limitation, as illustratively shown in FIG. 4, the output response 208i may include a prompt 216 and may not include a product listing. The prompt 216 may include a conversation indicator and a cue for an inquiry and/or a request for another user input 204 to be entered into the interaction space 202 (interaction space 202ii) to be utilized by the collaborator unit 105 to refine and generate another output response 208. The user input 204 inputted and entered into the interaction space 202ii may comprise, for example, user input 204ii of "Okay, let me see what are most popular!" The collaborator unit 105 may receive the user input 204ii and compare and match the user input 202ii to the search terms 104 to determine and define a refined query input. The collaborator unit 105 may associate the refined query input with at least a portion of the reference data 102 to generate and display a refined output response 208, such as output response 208ii, at the user device 118. In some embodiments of the present invention, the collaborator unit 105 may associate the refined query input with one or more of the user input(s) 204, the query input(s), and/or the output response(s) 208 to generate and display the output response 208ii at the user device 118.

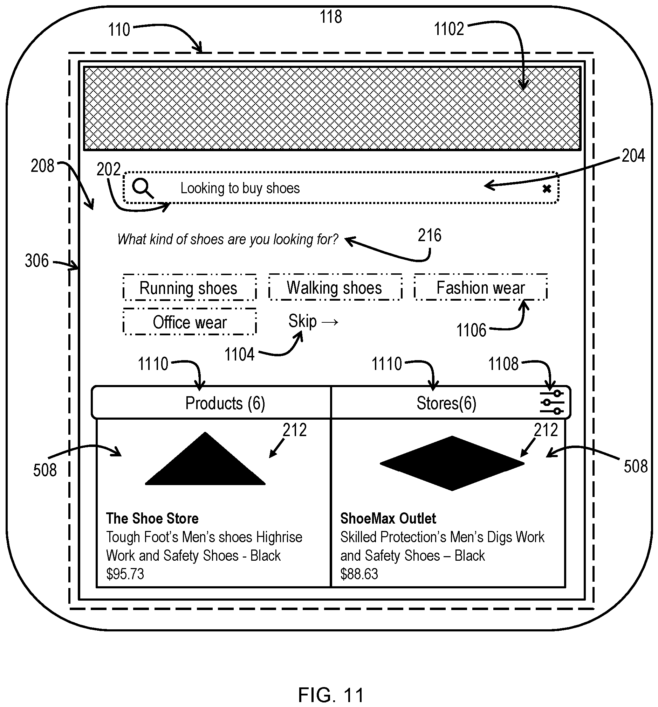

Now specifically referring to FIG. 11, a web browser 220 of a user device 118 may display an interaction space 202. As mentioned further above, the web browser 220 may comprise one or more of a website, a web browser extension, a webpage (e.g. an interaction space webpage 306), and/or an application on a user device 118. For the purposes of the following description of some embodiments of the present invention, the term interaction space webpage 306 may be understood to refer to one or more of a website, webpage, and/or application which may have the same features, functions, and/or characteristics as described regarding the interaction space webpage 306 throughout herein. The interaction space webpage 306 may display a banner 1102 positioned at an upper portion of the interaction space webpage 306. The banner 1102 may include symbols, wording, depictions, and/or text that may be associated with the interaction space webpage 306. The interaction space webpage 306 may include an interaction space 202. One or more of a user input 204 may be inputted and entered into the interaction space 202. For example, the user input 204 may comprise of the terms "Looking to buy shoes," as illustrated in FIG. 11.

The collaborator unit 105 may receive the user input 204, and, responsive to the user input 204, the collaborator unit 105 may generate and display an output response 208 at the user device 118. The output response 208 may comprise a prompt 216 that comprises one or more of a conversation indicator and/or a product listing. In some embodiments of the present invention, the output response 208 may also include one or more of an operator 1104, a user input suggestion 1106, a search filter 1108, and a search type target 1110. The user input suggestion 1106 may be displayed at the user device 118 and/or at the display 110 on the interaction space webpage 306. The user input suggestion 1106 may be displayed adjacent and/or below a conversation indicator displayed adjacent to and/or below the interaction space 202. The user input suggestion 1106 may comprise a textual suggestion related to refining the search associated with the user input 204 entered into the interaction space 202. The textual suggestion may also be related to the conversation indicator of the prompt 216 of the output response 208. For example, without limitation, based on the user input 204 comprising "Looking to buy shoes," the conversation indicator of the prompt 216 may comprise the text "What kind of shoes are you looking for?", and the user input suggestion 1106 may comprise a textual suggestion comprising one or more of "Running shoes," "Walking shoes," "Fashion wear," and/or "Office wear," as illustrated in FIG. 11. It is contemplated that in some embodiments of the present invention, an output response 208 may comprise more than one user input suggestion 1106, such as, without limitation, the four displayed user input suggestions 1106 illustratively shown in FIG. 11.

The user input suggestion 1106 may be operable to send the content of the textual suggestions of the user input suggestion 1106 to the collaborator unit 105 as a user input 204, as an additional user input 204, and/or as a refined user input 204. For example, the user input suggestion 1106 may be operable to be selected on the user device 118 to send the content of the textual suggestions of the user input suggestion 1106 to the collaborator unit 105 as a user input 204, as an additional user input 204, and/or as a refined user input 204. As mentioned and described above, the collaborator unit 105 may generate an additional output response 208 and/or a refined output response 208 responsive to the user input 204, which, in some embodiments of the present invention such as the embodiment illustrated in FIG. 11, may be received by the collaborator unit 105 via an operation of the user input suggestion 1106 at the user device 118.

The operator 1104 may be displayed on the interaction space webpage 306 at the user device 118. The operator 1104 may also be displayed adjacent to one of the user input suggestion 1106. The operator 1104 may comprise an operator text that is related to an action for the collaborator unit 105 to perform related to the conversation indicator of the prompt 216 and/or that is related to the user input suggestion 1106. The operator 1104 may be operable at the user device 118 to send an operation signal to the collaborator unit 105 related to the user input suggestion 1106. The collaborator unit 105 may be operable to generate at least a portion of a new output response 208 to display and replace at least a portion of a currently displayed output response 208 one the webpage 306 of the user device 118 responsive to the operation signal. Specifically, but without limitation, responsive to the operation signal, the collaborator unit 105 may be operable to generate a new portion of the output response 208 related to the user input suggestion(s) 1106 and/or related to the conversation indicator and replace the user input suggestion(s) 1106 and/or the conversation indicator of the current output response 208 displayed at the user device 118.

For example, without limitation, the operator 1104 may comprise a displayed text comprising "Skip," and the operator 1104 may be selected at the user device 118 to send an operation signal to the collaborator unit 105 cause the generate a new user input suggestion 1106 and/or a new conversation indicator related to the user input 204, and display the new user input suggestion 1106 and/or a new conversation indicator by replacing the user input suggestion 1106 and/or conversation indicator of the output response 208 currently displayed at the user device 118. Here, for example, without limitation, the conversation indicator "What kind of shoes are you looking for?" may be replaced with a new conversation indicator of "Are you looking for shoes for yourself, or for someone else?" Moreover, for example and without limitation, the user input suggestions 1106 "Running shoes," "Walking shoes," "Fashion wear," and/or "Office wear," may be replaced with new user input suggestions 1106 of "Women's shoes," "Men's shoes," "Children's shoes," and/or "Shoe's for everyone."

The search choice 1110 may be displayed at the user device 118 and on the website 306 adjacent to and/or below the user input suggestion(s) 1106. Some embodiments of the present invention, without limitation, may include more than one search choice 1110, as illustrated in FIG. 11. Each search choice 1110 may be associated with a respective product listing type and may comprise a textual indication of the associated product listing type, such as, without limitation, "Products" and/or "Stores." The search choice 1110 may be selectable to cause one or more product listings associated with the product listing type of the search choice 1110 to be displayed by the output response 208 generated by the collaborator unit 105. For example, without limitation, a search choice 1110 associated with a respective product listing type of "Products" may be selected to cause the collaborator unit 105 to display one or more product listings, such as formulated offerings 508, to be displayed adjacent to and/or below the search choice 1110 as illustrated in FIG. 11. For another example, without limitation, a search choice 1110 associated with a respective product listing type of "Stores" may be selected to cause the collaborator unit 105 to display one or more product listings, such as formulated offerings 508 that comprise online publishers 214 and/or online retailers 214 associated with the query input of the search conducted, to be displayed adjacent to and/or below the search choice 1110.

In some embodiments of the present invention, the search choice 1110 may include a numerical indicator displayed that may be related to the number of formulated offerings 508 that may be displayed upon the selection of the search choice 1110. For example, as illustrated in FIG. 11, the search choice 1110 of "Products" may include a numerical indicator of "(6)" indicating that there are six formulated offerings 508 that comprise online publishers 214 and/or online retailers 214 associated with the query input of the search conducted. Some embodiments of the present invention may also include a search filter 1108. The search filter 1108 may be displayed adjacent to one of the search choice(s) 1110 at the user device 118. The search filter 1108 may be operable at the user device 118 to display the formulated offerings 508 of the output response 208 in one or more organized lists. For example, without limitation, the search filter 1108 may be operated to the formulated offerings 508 of the output response 208 in an organized list comprising one or more of price, alphabetical, brand name, retainer name, popularity, relevance, color, and/or distance to store location.

The embodiments of the present invention as described and illustrated in FIG. 11 may be considered, without limitation, as the preferred embodiments of the present invention. However, the embodiments of the present invention are not limited to the embodiments as described and illustrated in FIG. 11.

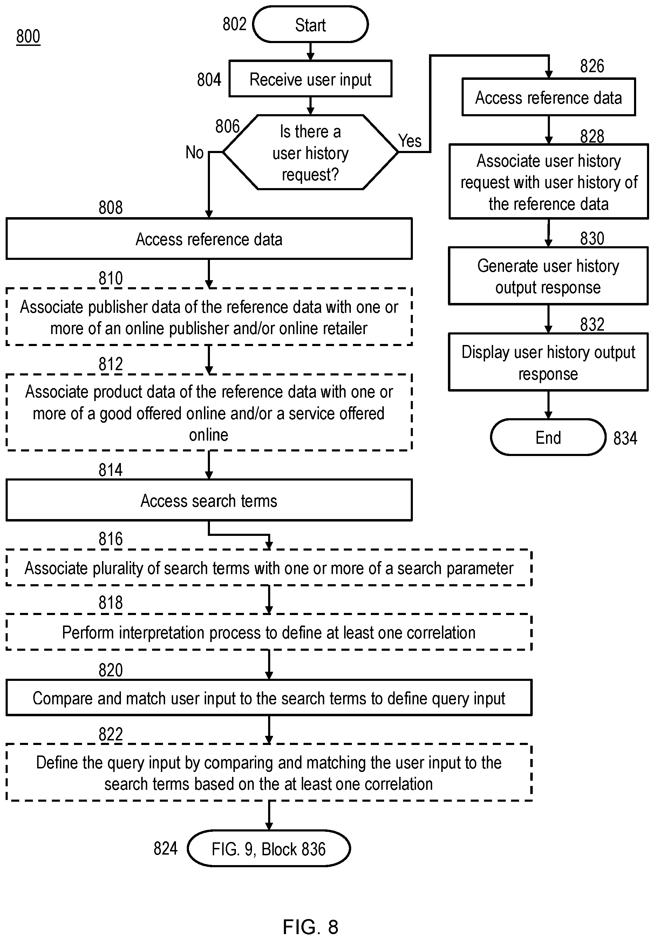

Now referring to FIGS. 8-9, an exemplary method aspect for using the computer-implemented system 100 for providing targeted search and query results may be illustratively seen. At Block 802, the method 800 may start and continue to Block 804. At Block 804 a user input 204 may be received by the collaborator unit 105. From Block 804, the method 800 may be continued to Block 806 and the collaborator unit 105 may determine if the user input 204 includes a user history request. The collaborator unit 105 may determine and identify if a user input 204 comprises a user history request by accessing the plurality of search terms 103 and comparing and matching the user input 204 to the plurality of search terms 103 to define a user history query input which indicates a user history request. If, at Block 806 the collaborator unit 105 determines that the user input 204 includes a user history request, the collaborator unit 105 may continue the method 800 to Block 826 to access reference data 102. The collaborator unit 105 may then continue to Block 828 to associate the user history request with the user history of the reference data 102. Then, from block 828 the collaborator unit 105 may continue the method 800 to Block 830 to generate a user history output response 208. The collaborator unit 105 may generate the user history output response 208 by matching the user history request and/or the user history query input to a least a portion of the user profile data of the reference data 102 to identify and associate portion(s) of the user profile data to the user history request. The collaborator unit 105 may then move from Block 830 to Block 832 to display the user history output response 208 at the user device 118. Then, from Block 832, the collaborator unit 105 may move to Block 834 to end the method 800.

If, however, at Block 806 the collaborator unit 105 determines that the user input 204 does not comprise a user history request, then the collaborator unit 105 may continue the method to Block 808 to access the reference data 102. Then, in some embodiments of the present invention, the collaborator unit 105 may move from Block 808 directly to Block 814. However, in some other embodiments of the present invention, the collaborator unit 105 may first move from Block 808 to Block 810 to associate publisher data of the reference data 102 with one or more of an online publisher and/or an online retailer of the reference data 102. Then, from Block 810, the collaborator unit 105 may move to Block 814. However, in some embodiments of the present invention, the collaborator unit 105 may instead first move from Block 810 to Block 812. Also, however, in some other embodiments of the present invention, the collaborator unit 105 may instead move directly from Block 808 to Block 812. At Block 812, the collaborator unit may associate the product data of the reference data 102 with one or more of a good and/or service offered online 212. Then from Block 812, the collaborator unit may continue the method 800 to Block 814.

At Block 814, the collaborator unit 105 may access the plurality of search terms 104. Then the collaborator unit 105 may continue the method to Block 820. However, in some embodiments of the present invention, from Block 814, the collaborator unit 105 may instead first move to Block 816 to associate the search terms 104 with one or more of a search parameter. Then, from Block 816 the collaborator unit may continue the method 800 to Block 820. However, in some embodiments of the present invention, from Block 816, the collaborator unit 105 may first instead continue the method 800 to Block 818 to perform an interpretation process to define at least one correlation between the user input 204, the search terms 104, and/or at least a portion of the reference data 102. Then, from Block 818 the collaborator unit 105 may continue to Block 820. However, in some other embodiments of the present invention, the collaborator unit 105 may continue directly from Block 808 to Block 818, and then from Block 818 to Block 820.

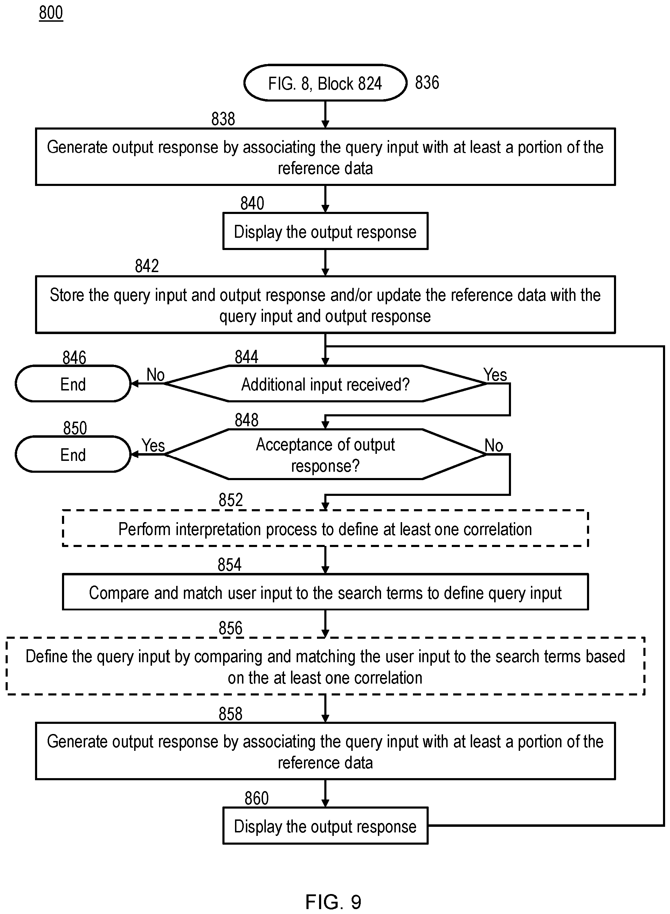

At Block 820, the collaborator unit may compare and match the user input 204 to the search terms 104 to define a query input. Then, the collaborator unit 105 may continue from Block 820 to Block 824 to continue the method 800 to Block 836 that is illustratively shown in FIG. 9. However, in some embodiments of the present invention, at Block 820, the collaborator unit 105 may instead first move to Block 822 to define the query input by comparing and matching the user input 204 to the search terms 104 based on the at least one correlation defined by the interpretation process. Then from Block 822, the collaborator unit may continue to Block 824 to continue the method 800 to Block 836 that is illustratively shown in FIG. 9. At Block 836, the collaborator unit 105 may move to Block 838 to generate an output response 208 by associating the query input with at least a portion of the reference data 102. Then the collaborator unit 105 may continue the method 800 to Block 840 to display the output response 208 at the user device 118.

From Block 840, the collaborator unit 105 may move to Block 842 to store the query input and the output response 208 and/or the collaborator unit 105 may update the reference data 102 with the query input and the output response 208. In some embodiments of the present invention, the collaborator unit 105 may also store the user input(s) 204. The collaborator unit 105 may store the user input(s) 204, the query input(s), and/or the output response(s) 208 in one or more of the reference data database 101, the data storage unit 107, and/or the at least one server 121. Then from Block 842, the collaborator unit 105 may move to Block 844 to determine if an additional and/or another user input 204 has been received by the collaborator unit 105. If, at Block 844, the collaborator unit 105 determines that an additional and/or another user input 204 has not been received by the collaborator unit 105, then the collaborator unit 105 may move to Block 846 to end the method 800. The collaborator unit 105 may determine that an additional and/or another user input 204 has not been received by the collaborator unit 105 if a predetermined amount of time has passed since the last user input 204 has been received by the collaborator unit 105.

If, however, at Block 844 the collaborator unit 105 determines that an additional and/or another user input 204 has been received by the collaborator unit 105, then the collaborator unit 105 may continue the method to Block 848 to determine if the additional and/or another user input 204 comprises an acceptance of the output response 208. If, at block 848, the collaborator unit 105 determines that the additional and/or another user input 204 comprises an acceptance of the output response 208, then the collaborator unit 105 may continue to Block 850 to end the method 800. If, however, at Block 848 the collaborator unit 105 determines that the additional and/or another user input 204 does not comprise an acceptance of the output response 208, then the collaborator unit 105 may continue to Block 854 to compare and match the additional user input 204 to the search terms 104 to define an additional query input. However, in some embodiments of the present invention, at Block 848, the collaborator unit 105 may instead first move to Block 852 to perform an interpretation process to determine at least one additional correlation between the user input 204 and/or the additional user input 204, the search terms 104, and at least a portion of the reference data 102. Then from Block 852, the collaborator unit 105 may continue to Block 854 to compare and match the additional user input 204 to the search terms 104 to define an additional query input.

Then from Block 854 the collaborator unit may continue to Block 858 to generate another output response 208 by associating the query input with at least a portion of the reference data 102. However, in some embodiments of the present invention, at Block 854, the collaborator unit 105 may instead first move to Block 856 to define the query input by comparing and matching the additional user input 204 to the search terms 104 based on the at least one correlation from the interpretation process. Then from the Block 856, the collaborator unit 105 may move to Block 858 to generate the other output response 208 by associating the query input with at least a portion of the reference data 102.

From Block 858, the collaborator unit 105 may continue the method 800 to Block 860 to display the additional output response 204 at the user device 118. Then from Block 860, the collaborator unit 105 move to Block 844 again to repeat the method 800 until an answer of "No" is determined by the collaborator unit at Block 844 to then end the method 800 at Block 846, and/or until an answer of "Yes" is determined by the collaborator unit 105 at Block 848 to then end the method 800 at Block 850.

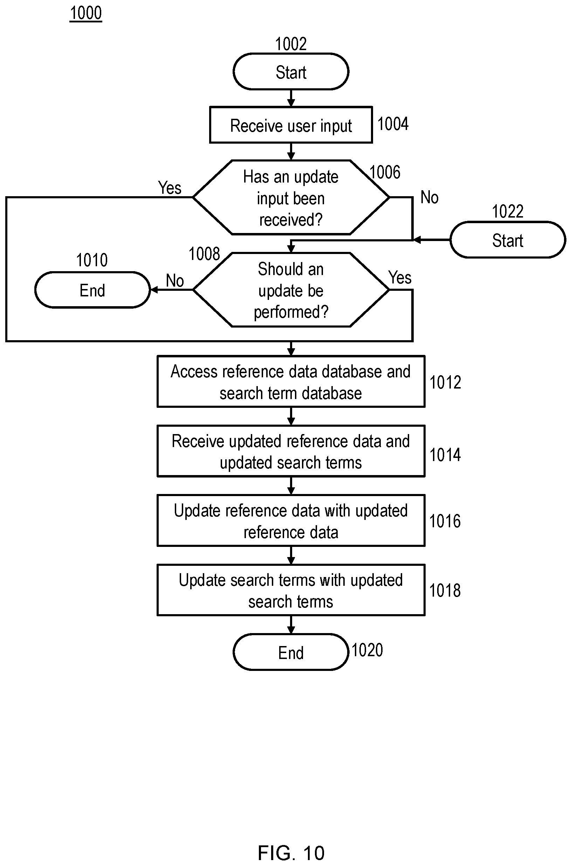

Now referring to FIG. 10, another method aspect of some of the embodiments of present invention may be illustratively seen. The method 1000 may be directed to a method of using an embodiment of the computer implemented system 100 to update data before, during, and/or after providing targeted search and query results. The collaborator unit 105 may start the method 1000 at Block 1002, and then continue to Block 1004 and receive a user input 204. The collaborator unit 105 may then continue from Block 1004 to Block 1006 to determine if the user input 204 comprises an update input. To determine if the user input 204 comprises an update input, the collaborator unit 105 may access the search terms 104 and compare and match the user input 204 to the search terms 104 to define a user update request input which indicates the update input. If, at Block 1006, the collaborator unit 105 determines that the user input 204 does comprise an update input, then the collaborator unit 105 may continue the method 1000 to Block 1012 to access the reference data database 101 and the search term database 103. If, however, at Block 1006, the collaborator unit 105 determines that the user input 204 does not comprise an update request, then the collaborator unit may instead continue the method from Block 1006 to Block 1008 to determine if an update should be performed. The collaborator unit 105 may determine if an update should be performed based on a predetermined amount of time has passed since the last update, and/or if the collaborator unit 105 has received an update command from one or more servers 121 in communication with the collaborator unit 105 via a network 116.

Also, in some embodiments of the present invention, the collaborator unit 105 may instead start the method from Block 1022 to then move directly to Block 1008 to determine if an update should be performed, instead of the collaborator unit 105 starting the method 1000 at Block 1002. At Block 1008, if the collaborator unit 105 determines that an update should not be performed, then the collaborator unit 105 may continue the method to Block 1010 to end the method 1000. If, however, at Block 1008 the collaborator unit 105 determines that an update should be performed, then the collaborator unit 105 may continue the method to Block 1012 to access the reference data database 101 and the search term database 103. The reference data database 101 and/or the search term database 103 may be carried by one or more server(s) 121 in communication with the collaborator unit 105 via a network 116. Then, from Block 1102, the collaborator unit 105 may move to Block 1014 to receive updated reference data 122 and/or updated search terms 123 from the reference data database 101 and/or the search term database 103.

Then, from Block 1014, the collaborator unit 105 may move to Block 1016 to update the reference data 102 with the updated reference data 122. Then, from Block 1016, the collaborator unit 105 may move to Block 1018 to update the search terms 104 with the updated search terms 123. Then from Block 1018, the collaborator unit 105 may move to Block 1020 to end the method 1000.

Some of the illustrative aspects of the present invention may be advantageous in solving the problems herein described and other problems not discussed which are discoverable by a skilled artisan.

While the above description contains much specificity, these should not be construed as limitations on the scope of any embodiment, but as exemplifications of the presented embodiments thereof. Many other ramifications and variations are possible within the teachings of the various embodiments. While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

Thus the scope of the invention should be determined by the appended claims and their legal equivalents, and not by the examples given.

## Claims

1. A computer-implemented system for queries and searches to provide targeted search and query results, the system comprising:
a reference data database, the reference data database including reference data;
a search term database, the search term database including a plurality of search terms;
a collaborator unit communicatively coupled to a network and configured to access the reference data database and the search term database;
wherein the collaborator unit receives at least one user input inputted into an interaction space of a user device, to define a first user input;
wherein the collaborator unit compares and matches the first user input to the plurality of search terms to define a first query input;
wherein the collaborator unit associates the first query input with at least a portion of the reference data to generate a first output response to be displayed at the user device;
wherein the collaborator unit is operable to receive an additional user input to define a refined user input;
wherein the collaborator unit compares and matches the refined user input to the plurality of search terms to define a refined query input;
wherein the collaborator unit associates the refined query input with at least a portion of the reference data and with the first output response to generate a refined output response to be displayed at the user device.

2. The computer-implemented system of claim 1, wherein the reference data includes at least one of user profile data, non-user profile data, publisher data, and product data.

3. The computer-implemented system of claim 2, wherein the user profile data is associated with a current user of the user device; and wherein the user profile data includes at least one of input history inputted by the current user, internet search history of the current user, geographic location of the current user, present time of day, present date, current season at the geographic location of the user device, online purchase history by the current user, website browsing history of the current user, type of user device being used, and length of present internet session of the current user.

4. The computer-implemented system of claim 3, wherein the collaborator unit is operable to update the user profile data with at least one of the first user input, the first query input, the first output response, the refined user input, the refined query input, and the refined output response; wherein the collaborator unit is operable to identify a user history request based on at least one of the first user input and the refined user input; and wherein the collaborator unit displays at least a portion of the user profile data based on the user history request.

5. The computer-implemented system of claim 2, wherein the non-user profile data includes at least one of input history inputted by other users, internet search history of the other users, geographic location of the other users, time-stamps of the other users, time-stamps of the seasons of the other users, online purchase history by the other users, and website browsing history of the other users.

6. The computer-implemented system of claim 2, wherein the publisher data is associated with at least one of an online product publisher and an online retailer; and wherein the publisher data includes at least one of publisher review ratings, publisher engagement count, publisher placement bids, publisher sales history, publisher product offerings, publisher geographic location, publisher trust rating, and publisher success history.

7. The computer-implemented system of claim 2, wherein the product data is associated with at least one of a good offered online and a service offered online; wherein the product data includes at least one of product price, product price history, relative product price to comparable products, product quantity in stock, estimated shipping cost, estimated product shipping speed, product geographic location, product source location, product review rating, product purchase history, product engagement history, product return history, product satisfaction rating, associated supplier, publisher data of the product, and at least one product characteristic; and wherein the at least one product characteristic includes at least one of product type, product quality, product associated occasion, product dimensions, product associated use, product brand, product material, product style, product color, and product use compatibility.

8. The computer-implemented system of claim 1, wherein the first user input and the refined user input comprises at least one of a character, a word, a phrase, a sentence, a spoken language, a speech-to-text input, an image, a webpage, a document, a statement, a request, a point of information, and a question; wherein each of the first user input and the refined user input is associated with a description; and wherein the description includes at least one of an occasion, a use, problem, want, need, a date, date of use, date of receival, date range, a price, price range, geographic location, a good, a good type, a service, a service type, and product traits; and wherein the product traits may include quality, reliability, color, style, dimensions, compatibility, popularity, source, provider, and product composition.

9. The computer-implemented system of claim 1, wherein each of the plurality of search terms is associated with at least one search parameter; and wherein the at least one search parameter comprises at least one of a good constraint, a good type constraint, a service constraint, a service type constraint, a geographic location constraint, a weather constraint, a season constraint, a use indication constraint, a problem indication constraint, a cost constraint, a time constraint, a good characteristics constraint, a service characteristics constraint, and a source constraint.

10. The computer-implemented system of claim 1, wherein the collaborator unit performs an interpretation process to determine at least one correlation between the first user input, the plurality of search terms, and at least a portion of the reference data; and wherein the first query input is defined by comparing and matching the first user input to the plurality of search terms based on the at least one correlation.

11. The computer-implemented system of claim 1, wherein the collaborator unit performs a refined interpretation process to determine at least one refined correlation between the first user input, the refined user input, the plurality of search terms, and at least a portion of the reference data; and wherein the refined query input is defined by comparing and matching the refined user input to the plurality of search terms based on the at least one refined correlation.

12. The computer-implemented system of claim 1, wherein the first output response and the refined output response each comprise at least one of a prompt and a landing page;
wherein the prompt:
is displayed at least one of at the interaction space and adjacent to the interaction space; and
comprises at least one of a conversation indicator and a product listing, wherein:
the conversation indicator comprises at least one of a statement, a question, an assertion, a declaration, an explanation, an exclamation, an answer, and a command; and
the product listing includes at least one of a hyperlink, a product advertisement, and a product description; and
wherein the landing page comprises at least one of a product offering webpage, a goods offering webpage, a service offering webpage, a publisher website, a retailer website, a merchant webpage, a product review webpage, a product discussion webpage and a formulated webpage, the formulated webpage comprising at least one of a formulated offering webpage and a formulated directory webpage.

13. The computer-implemented system of claim 12, wherein the conversation indicator includes a cue; and wherein the cue includes a request for at least one of, user input to be inputted into the interaction space to refine at least one of the first output response and the refined output response, and an inquiry to accept at least one of the first output response and the refined output response with the user input inputted responsive to the cue.

14. The computer-implemented system of claim 1, wherein the first output response is based on the portion of the reference data associated with the first query input; and wherein the refined output response is based on the portion of the reference data associated with the refined query input.

15. The computer-implemented system of claim 1, further comprising at least one server communicatively coupled to the network; wherein the reference data database and the search term database are downloadable and updatable to be stored on the user device; wherein the at least one server stores at least one of updated reference data and updated search terms; and wherein the collaborator unit accesses the at least one server via the network and updates at least a portion of the reference data with the updated reference data and update the plurality of search terms with the updated search terms.
